# EUROPEAN PATENT APPLICATION

(11) **EP 4 557 739 A1**
(43) Date of publication of application: **21.05.2025**
(21) Application number: 23839918.2
(22) Date of filing: 11.07.2023
(51) Int. Cl.: H04N 19/597, H04N 19/132, H04N 19/96, H04N 19/70, H04N 21/2343

(54) **TRANSMISSION DEVICE FOR POINT CLOUD DATA, METHOD PERFORMED BY TRANSMISSION DEVICE, RECEPTION DEVICE FOR POINT CLOUD DATA, AND METHOD PERFORMED BY RECEPTION DEVICE**

(30) Priority: 11.07.2022 US 202263359892 P
(71) Applicant: LG Electronics Inc., Yeongdeungpo-gu Seoul 07336 (KR)
(72) Inventor: TAN, Hendry, Seoul 06772 (KR); LEE, Jinwon, Seoul 06772 (KR); SUH, Jongyeul, Seoul 06772 (KR); KIM, Seung Hwan, Seoul 06772 (KR)
(74) Representative: Mooser, Sebastian Thomas
(86) International application number: PCT/KR2023/009825
(87) International publication number: WO 2024/014826

(57) **Abstract**

A transmitting apparatus of point cloud data, a method performed by the transmitting apparatus, a reception apparatus, and a method performed by the reception apparatus are provided. According to the present disclosure, the method performed by the reception apparatus of point cloud data may include obtaining parameter sets necessary for a random access from the point cloud data, based on that a request for the random access from a first sample among samples within the point cloud data is occurred, and decoding the first sample and one or more samples that follow the first sample in decoding order, based on the parameter sets. The parameter sets may be obtained from a sample entry of a track or a predetermined sample, based on at least one of a sample entry type of the track including the first sample, a presence of a sync sample box or a presence of parameter set sample group boxes.

## Description

### Technical Field

The present disclosure relates to a method and device for processing point cloud content.

### Background Art

Point cloud content is expressed as a point cloud which is a set of points belonging to a coordinate system representing a three-dimensional space. The point cloud content may represent three-dimensional media and is used to provide various services such as virtual reality (VR), augmented reality (AR), mixed reality (MR) and self-driving services. Since tens of thousands to hundreds of thousands of point data are required to express point cloud content, a method of efficiently processing a vast amount of point data is required.

### Disclosure

### Technical Problem

An object of the present disclosure is to provide a method and device for efficiently processing point cloud data.

In addition, an object of the present disclosure is to provide a method and device for supporting a right random access function.

In addition, an object of the present disclosure is to provide a method and device for providing a random access function based on a sample entry type of a track to which a random access sample belongs.

In addition, an object of the present disclosure is to provide a method and device for providing a random access function based on whether or not a sync sample box or a parameter set sample group box is present.

In addition, an object of the present disclosure is to provide a method and device for processing a file storage technique for supporting efficient access to a stored G-PCC bitstream.

The technical problems solved by the present disclosure are not limited to the above technical problems and other technical problems which are not described herein will be clearly understood by a person having ordinary skill in the technical field, to which the present disclosure belongs, from the following description.

### Technical Solution

According to an embodiment of the present disclosure, a method performed by a reception apparatus of point cloud data may include obtaining parameter sets necessary for a random access, from the point cloud data, based on that a request for the random access from a first sample among samples included in the point cloud data is occurred and decoding the first sample and one or more samples that follow the first sample in decoding order, based on the parameter sets. The parameter sets may be obtained from either a sample entry of a track including the first sample or a predetermined sample, based on at least one of a sample entry type of the track, a presence of a sync sample box or a presence of parameter set sample group boxes.

According to another embodiment of the present disclosure, a reception apparatus of point cloud data may include memory and at least one processor. The at least one processor may be configured to obtain parameter sets necessary for the random access from the point cloud data, based on that a request for a random access from a first sample among samples included in the point cloud data is occurred, and to decode the first sample and one or more samples that follow the first sample in decoding order, based on the parameter sets. The parameter sets may be obtained from either a sample entry of a track including the first sample or a predetermined sample, based on at least one of a sample entry type of the track, a presence of a sync sample box or a presence of parameter set sample group boxes.

According to still another embodiment of the present disclosure, a method performed by a transmitting apparatus of point cloud data may include storing a bitstream including the point cloud data into one or more tracks and generating geometry-based point cloud compression (G-PCC) file based on the tracks. Parameter sets necessary for a random access from a first sample within the point cloud data may be included in either a sample entry of a track including the first sample or a predetermined sample, based on at least one of a sample entry type of the track, a presence of a sync sample box or a presence of parameter set sample group boxes.

According to yet another embodiment of the present disclosure, a transmitting apparatus of point cloud data may include memory and at least one processor. The at least one processor may be configured to store a bitstream including the point cloud data into one or more tracks and to generate geometry-based point cloud compression (G-PCC) file based on the tracks. Parameter sets necessary for a random access from a first sample within the point cloud data may be included in either a sample entry of a track including the first sample or a predetermined sample, based on at least one of a sample entry type of the track, a presence of a sync sample box or a presence of parameter set sample group boxes.

### Advantageous Effects

According to the present disclosure, it is possible to provide a method and device for efficiently processing point cloud data.

Also, according to the present disclosure, it is possible to provide a method and device for supporting a right random access function.

Also, according to the present disclosure, it is possible to provide a method and device for providing a point cloud content service that processes random access based on a sample entry type of a track to which a random access sample belongs.

Also, according to the present disclosure, it is possible to provide a method and device for providing a point cloud content service that processes random access based on whether or not a sync sample box or a parameter set sample group box is present.

Also, according to the present disclosure, it is possible to provide a method and device for processing a file storage technique for supporting efficient access to a stored G-PCC bitstream.

The effects obtainable from the present disclosure are not limited to the above-mentioned effects, and other effects not mentioned herein will be clearly understood by those skilled in the art through the following descriptions.

### Description of Drawings

FIG. 1 is a block diagram illustrating an example of a point cloud content provision system according to embodiments of the present disclosure.
FIG. 2 is a block diagram illustrating an example of a point cloud content provision process according to embodiments of the present disclosure.
FIG. 3 is a diagram illustrating an example of a point cloud encoding apparatus according to embodiments of the present disclosure.
FIG. 4 is a block diagram illustrating an example of a point cloud decoding apparatus according to embodiments of the present disclosure.
FIG. 5 is a block diagram illustrating another example of a point cloud decoding apparatus according to embodiments of the present disclosure.
FIG. 6 is a block diagram showing another example of a transmission device according to embodiments of the present disclosure.
FIG. 7 is a block diagram showing another example of a reception device according to embodiments of the present disclosure.
FIG. 8 illustrates an example of a structure capable of interworking with a method/device for transmitting and receiving point cloud data according to embodiments of the present disclosure.
FIG. 9 is a block diagram showing still another example of a transmission device according to embodiments of the present disclosure.
FIG. 10 illustrates an example of spatially partitioning a bounding box into three-dimensional blocks according to embodiments of the present disclosure.
FIG. 11 is a block diagram showing another example of a reception device according to embodiments of the present disclosure.
FIG. 12 illustrates an example for a tile including a single track according to embodiments of the present disclosure.
FIG. 13 illustrates an example for a tile including multiple tracks according to embodiments of the present disclosure.
FIG. 14 is a flowchart showing a method for processing random access according to an embodiment of the present disclosure.
FIG. 15 is a flowchart showing a method performed in a reception device of point cloud data according to an embodiment of the present disclosure.
FIG. 16 is a flowchart showing a method performed in a transmission device of point cloud data according to an embodiment of the present disclosure.

### Mode for Invention

Hereinafter, embodiments of the present disclosure will be described in detail with reference to the accompanying drawings so that those of ordinary skill in the art to which the present disclosure pertains can easily implement them. The present disclosure may be embodied in several different forms and is not limited to the embodiments described herein.

In describing the present disclosure, a detailed description of known functions and configurations will be omitted when it may obscure the subject matter of the present disclosure. In addition, in the drawings, a portion that is irrelevant to the description of the present disclosure is omitted, and similar reference numerals refer to similar portions.

In the present disclosure, when a component is "connected", "coupled" or "linked" to another component, it may include not only a direct connection relationship but also an indirect connection relationship in which another component exists in therebetween. In addition, when a component "includes" or "has" other components, it means that other components may be further included rather than excluding other components unless the context clearly indicates otherwise.

In the present disclosure, terms such as first and second are used only for the purpose of distinguishing one component from other components, and do not limit the order, importance, or the like of components unless otherwise noted. Accordingly, within the scope of the present disclosure, a first component in one embodiment may be referred to as a second component in another embodiment, and, similarly, a second component in one embodiment is referred to as a first component in another embodiment.

In the present disclosure, components that are distinguished from each other are intended to clearly describe each of their characteristics, and do not necessarily mean that the components are separated from each other. That is, a plurality of components may be integrated into one hardware or software unit, or one component may be distributed to be configured in a plurality of hardware or software units. Accordingly, even if not specifically mentioned, such integrated or distributed embodiments are also included in the scope of the present disclosure.

In the present disclosure, components described in various embodiments do not necessarily mean essential components, and some thereof may be optional components. Accordingly, an embodiment composed of a subset of components described in one embodiment is also included in the scope of the present disclosure. In addition, embodiments including other components in addition to components described in various embodiments are also included in the scope of the present disclosure.

The present disclosure relates to encoding and decoding of point cloud-related data, and terms used in the present disclosure may have general meanings commonly used in the technical field to which the present disclosure belongs unless they are newly defined in the present disclosure.

In the present disclosure, the term "/" and "," should be interpreted to indicate "and/or." For example, "A/B" and "A, B" may be interpreted to indicate "A and/or B". In addition, "A/B/C" and "A, B, C" may mean "at least one of A, B and/or C".

In the present disclosure, the term "or" should be interpreted to indicate "and/or." For instance, the expression "A or B" may comprise 1) only "A", 2) only "B", and/or 3) both "A and B". In other words, in the present disclosure, the term "or" should be interpreted to indicate "additionally or alternatively."

The present disclosure relates to compression of point cloud-related data. Various methods or embodiments of the present disclosure may be applied to a point cloud compression or point cloud coding (PCC) standard (e.g., G-PCC or V-PCC standard) of a moving picture experts group (MPEG) or a next-generation video/image coding standard.

In the present disclosure, a "point cloud" may mean a set of points located in a three-dimensional space. Also, in the present disclosure, "point cloud content" is expressed as a point cloud, and may mean a "point cloud video/image". Hereinafter, the 'point cloud video/image' is referred to as a 'point cloud video'. A point cloud video may include one or more frames, and one frame may be a still image or a picture. Accordingly, the point cloud video may include a point cloud image/frame/picture, and may be referred to as any one of a "point cloud image", a "point cloud frame", and a "point cloud picture".

In the present disclosure, "point cloud data" may mean data or information related to each point in the point cloud. Point cloud data may include geometry and/or attribute. In addition, the point cloud data may further include metadata. The point cloud data may be referred to as "point cloud content data" or "point cloud video data" or the like. In addition, the point cloud data may be referred to as "point cloud content", "point cloud video", "G-PCC data", and the like.

In the present disclosure, a point cloud object corresponding to point cloud data may be represented in a box shape based on a coordinate system, and the box shape based on the coordinate system may be referred to as a bounding box. That is, the bounding box may be a rectangular cuboid capable of accommodating all points of the point cloud, and may be a cuboid including a source point cloud frame.

In the present disclosure, geometry includes the position (or position information) of each point, and the position may be expressed by parameters (e.g., for example, an x-axis value, a y-axis value, and a z-axis value) representing a three-dimensional coordinate system (e.g., a coordinate system consisting of an x-axis, y-axis, and z-axis). The geometry may be referred to as "geometric information".

In the present disclosure, the attribute may include properties of each point, and the properties may include one or more of texture information, color (RGB or YCbCr), reflectance (r), transparency, etc. of each point. The attribute may be referred to as "attribute information". Metadata may include various data related to acquisition in an acquisition process to be described later.

### Overview of point cloud content provision system

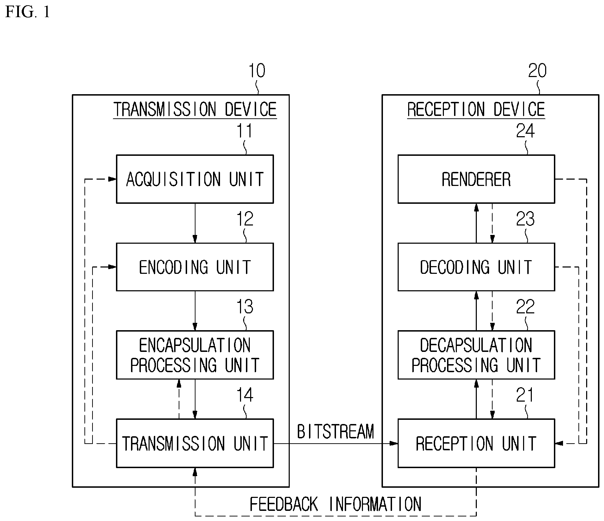

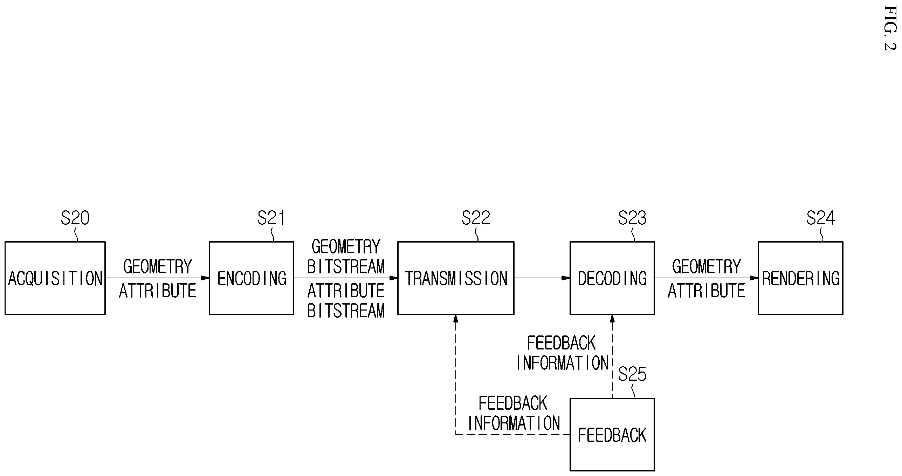

FIG. 1 illustrates an example of a system for providing point cloud content (hereinafter, referred to as a 'point cloud content provision system') according to embodiments of the present disclosure. FIG. 2 illustrates an example of a process in which the point cloud content provision system provides point cloud content.

As shown in FIG. 1, the point cloud content provision system may include a transmission device 10 and a reception device 20. The point cloud content provision system may perform an acquisition process S20, an encoding process S21, a transmission process S22, a decoding process S23, a rendering process S24 and/or a feedback process S25 shown in FIG.2 by operation of the transmission device 10 and the reception device 20.

The transmission device 10 obtains point cloud data and outputs a bitstream through a series of processes (e.g., encoding process) for the obtained point cloud data (source point cloud data), in order to provide point cloud content. Here, the point cloud data may be output in the form of a bitstream through an encoding process. In some embodiments, the transmission device 10 may transmit the output bitstream in the form of a file or streaming (streaming segment) to the reception device 20 through a digital storage medium or a network. The digital storage medium may include a variety of storage media such as USB, SD, CD, DVD, Blu-ray, HDD, and SSD. The reception device 20 may process (e.g., decode or reconstruct) the received data (e.g., encoded point cloud data) into source point cloud data and render it. The point cloud content may be provided to the user through these processes, and the present disclosure may provide various embodiments necessary to effectively perform a series of these processes.

As illustrated in FIG. 1, the transmission device 10 may include an acquisition unit 11, an encoding unit 12, an encapsulation processing unit 13 and a transmission unit 14, and the reception device 20 may include a reception unit 21, a decapsulation processing unit 22, a decoding unit 23, and a rendering unit 24.

The acquisition unit 11 may perform a process S20 of obtaining a point cloud video through a capturing, synthesizing or generating process. Accordingly, the acquisition unit 11 may be referred to as a 'point cloud video acquisition unit'.

Point cloud data (geometry and/or attribute, etc.) for a plurality of points may be generated by the acquisition process (S20). Also, through the acquisition process (S20), metadata related to the acquisition of the point cloud video may be generated. Also, mesh data (e.g., triangular data) indicating connection information between point clouds may be generated by the acquisition process (S20).

The metadata may include initial viewing orientation metadata. The initial viewing orientation metadata may indicate whether the point cloud data is data representing the front or the back. The metadata may be referred to as "auxiliary data" that is metadata for the point cloud.

The obtained point cloud video may include the polygon file format or the Stanford triangle format (PLY) file. Since the point cloud video has one or more frames, the obtained point cloud video may include one or more PLY files. The PLY file may include point cloud data of each point.

In order to obtain a point cloud video (or point cloud data), the acquisition unit 11 may be composed of a combination of camera equipment capable of obtaining depth (depth information) and RGB cameras capable of extracting color information corresponding to the depth information. Here, the camera equipment capable of obtaining the depth information may be a combination of an infrared pattern projector and an infrared camera. In addition, the acquisition unit 11 may be composed of a LiDAR, and the LiDAR may use a radar system for measuring the position coordinates of a reflector by measuring a time required for a laser pulse to be emitted and returned after being reflected.

The acquisition unit 110 may extract a shape of geometry composed of points in a three-dimensional space from the depth information, and may extract an attribute representing a color or reflection of each point from the RGB information.

As a method of extracting (or capturing, obtaining, etc.) a point cloud video (or point cloud data), there may be an inward-facing method of capturing a central object and an outward-facing method of capturing an external environment.

Meanwhile, when a point cloud video is to be provided regarding a virtual space generated by a computer, capture should be performed through a real camera. In this case, post-processing may be needed to enhance the quality of a capture point cloud content. For example, the acquisition process (S20) may adjust a maximum/minimum depth value within a range provided by a camera equipment, but post-processing may be performed to remove an undesired area (e.g., background) or point data of the undesired area, or post-processing may be performed to recognize a connected space and fill a spatial hole. As another example, post-processing may be performed to integrate point cloud data extracted from cameras sharing a spatial coordinate system into one content through a process of converting each point into a global coordinate system based on a location coordinate of each camera. Thus, one point cloud content may be generated over a wide range, or a point cloud content with a high density of points may be obtained.

The encoding unit 12 may perform the encoding process (S21) of encoding the data (e.g., geometry, attribute and/or metadata, and/or mesh data, etc.) generated by the acquisition unit 11 into one or more bitstreams. Accordingly, the encoding unit 12 may be referred to as a 'point cloud video encoder'. The encoding unit 12 may encode the data generated by the acquisition unit 11 in series or in parallel.

The encoding process S21 performed by the encoding unit 12 may be geometry-based point cloud compression (G-PCC). The encoding unit 12 may perform a series of procedures such as prediction, transform, quantization, and entropy coding for compression and coding efficiency.

The encoded point cloud data may be output in the form of a bitstream. Based on the G-PCC procedure, the encoding unit 12 may partition the point cloud data into geometry and attribute and encode them as described below. In this case, the output bitstream may include a geometry bitstream including the encoded geometry and an attribute bitstream including the encoded attribute. In addition, the output bitstream may further include one or more of a metadata bitstream including metadata, an auxiliary bitstream including auxiliary data, and a mesh data bitstream including mesh data. The encoding process (S21) will be described in more detail below. A bitstream including the encoded point cloud data may be referred to as a 'point cloud bitstream' or a 'point cloud video bitstream'.

The encapsulation processing unit 13 may perform a process of encapsulating one or more bitstreams output from the decoding unit 12 in the form of a file or a segment. Accordingly, the encapsulation processing unit 13 may be referred to as a 'file/segment encapsulation module'. Although the drawing shows an example in which the encapsulation processing unit 13 is composed of a separate component/module in relation to the transmission unit 14, the encapsulation processing unit 13 may be included in the transmission unit 14 in some embodiments.

The encapsulation processing unit 13 may encapsulate the data in a file format such as ISO Base Media File Format (ISOBMFF) or process the data in the form of other DASH segments. In some embodiments, the encapsulation processing unit 13 may include metadata in a file format. Metadata may be included, for example, in boxes of various levels in the ISOBMFF file format, or as data in a separate track within the file. In some embodiments, the encapsulation processing unit 130 may encapsulate the metadata itself into a file. The metadata processed by the encapsulation processing unit 13 may be transmitted from a metadata processing unit not shown in the drawing. The metadata processing unit may be included in the encoding unit 12 or may be configured as a separate component/module.

The transmission unit 14 may perform the transmission process (S22) of applying processing (processing for transmission) according to a file format to the 'encapsulated point cloud bitstream'. The transmission unit 140 may transmit the bitstream or a file/segment including the bitstream to the reception unit 21 of the reception device 20 through a digital storage medium or a network. Accordingly, the transmission unit 14 may be referred to as a 'transmitter' or a 'communication module'.

The transmission unit 14 may process point cloud data according to an arbitrary transmission protocol. Here, 'processing the point cloud data according to the arbitrary transmission protocol' may be 'processing for transmission'. The processing for transmission may include processing for transmission through a broadcast network, processing for transmission through a broadband, and the like. In some embodiments, the transmission unit 14 may receive not only point cloud data but also metadata from the metadata processing unit, and may perform processing for transmission on the transmitted metadata. In some embodiments, the processing for transmission may be performed by the transmission processing unit, and the transmission processing unit may be included in the transmission unit 14 or configured as a component/module separate from the transmission unit 14.

The reception unit 21 may receive the bitstream transmitted by the transmission device 10 or a file/segment including the bitstream. Depending on the transmitted channel, the reception unit 21 may receive a bitstream or a file/segment including the bitstream through a broadcast network, or may receive a bitstream or a file/segment including the bitstream through a broadband. Alternatively, the reception unit 21 may receive a bitstream or a file/segment including the bitstream through a digital storage medium.

The reception unit 21 may perform processing according to a transmission protocol on the received bitstream or the file/segment including the bitstream. The reception unit 21 may perform a reverse process of transmission processing (processing for transmission) to correspond to processing for transmission performed by the transmission device 10. The reception unit 21 may transmit the encoded point cloud data among the received data to the decapsulation processing unit 22 and may transmit metadata to a metadata parsing unit. The metadata may be in the form of a signaling table. In some embodiments, the reverse process of the processing for transmission may be performed in the reception processing unit. Each of the reception processing unit, the decapsulation processing unit 22, and the metadata parsing unit may be included in the reception unit 21 or may be configured as a component/module separate from the reception unit 21.

The decapsulation processing unit 22 may decapsulate the point cloud data (i.e., a bitstream in a file format) in a file format received from the reception unit 21 or a reception processing unit. Accordingly, the decapsulation processing unit 22 may be referred to as a 'file/segment decapsulation module'.

The decapsulation processing unit 22 may obtain a point cloud bitstream or a metadata bitstream by decapsulating files according to ISOBMFF or the like. In some embodiments, metadata (metadata bitstream) may be included in the point cloud bitstream. The obtained point cloud bitstream may be transmitted to the decoding unit 23, and the obtained metadata bitstream may be transmitted to the metadata processing unit. The metadata processing unit may be included in the decoding unit 23 or may be configured as a separate component/module. The metadata obtained by the decapsulation processing unit 23 may be in the form of a box or track in a file format. If necessary, the decapsulation processing unit 23 may receive metadata required for decapsulation from the metadata processing unit. The metadata may be transmitted to the decoding unit 23 and used in the decoding process (S23), or may be transmitted to the rendering unit 24 and used in the rendering process (S24).

The decoding unit 23 may receive the bitstream and perform operation corresponding to the operation of the encoding unit 12, thereby performing the decoding process (S23) of decoding the point cloud bitstream (encoded point cloud data). Accordingly, the decoding unit 23 may be referred to as a 'point cloud video decoder'.

The decoding unit 23 may partition the point cloud data into geometry and attribute and decode them. For example, the decoding unit 23 may reconstruct (decode) geometry from a geometry bitstream included in the point cloud bitstream, and restore (decode) attribute based on the reconstructed geometry and an attribute bitstream included in the point cloud bitstream. A three-dimensional point cloud video/image may be reconstructed based on position information according to the reconstructed geometry and attribute (such as color or texture) according to the decoded attribute. The decoding process (S23) will be described in more detail below.

The rendering unit 24 may perform the rendering process S24 of rendering the reconstructed point cloud video. Accordingly, the rendering unit 24 may be referred to as a 'renderer'.

The rendering process (S24) may refer to a process of rendering and displaying point cloud content in a 3D space. The rendering process (S24) may perform rendering according to a desired rendering method based on the position information and attribute information of the points decoded through the decoding process.

Points of a point cloud content may be rendered into an apex with a predetermined thickness, a cube with a specific minimum size centered at a corresponding apex location, or a circle centered at the apex location. A user may see an entire or partial area of a rendered result through a VR/AR display or a common display. A rendered video may be displayed through a display unit. A user may see an entire or partial area of a rendered result through a VR/AR display or a common display.

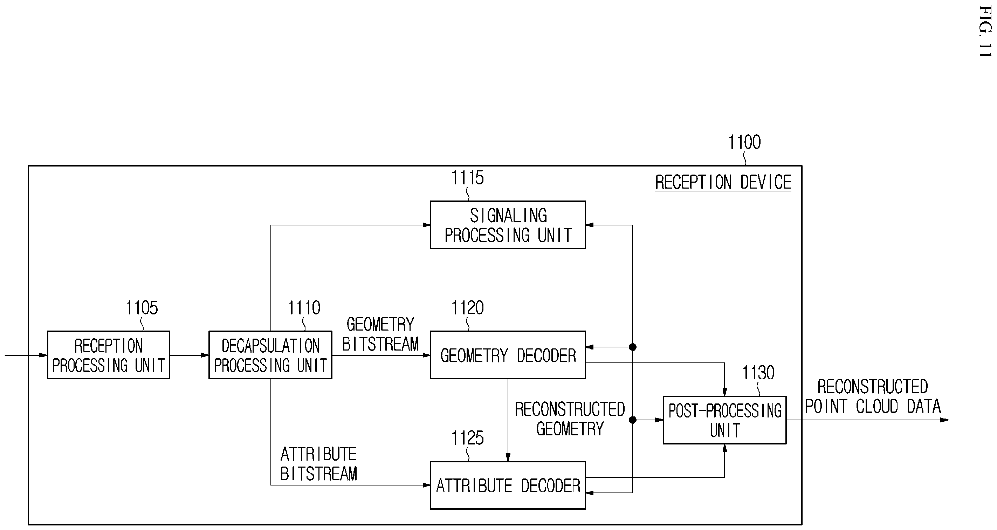

The feedback process (S25) may include a process of transmitting various feedback information that may be obtained during the rendering process (S24) or the display process to the transmission device 10 or to other components in the reception device 20. The feedback process (S25) may be performed by one or more of the components included in the reception device 20 of FIG. 1 or may be performed by one or more of the components shown in FIGS. 11 and 11. In some embodiments, the feedback process (S25) may be performed by a 'feedback unit' or a 'sensing/tracking unit'.

Interactivity for point cloud content consumption may be provided through the feedback process (S25). According to embodiments, in the feedback process (S25), head orientation information and viewport information indicating an area currently viewed by a user may be given as feedback. According to embodiments, the user may interact with things implemented in VR/AR/MR/self-driving environments, and in this case, information related to such interaction may be delivered to the transmission device 10 or a service provider side during the feedback process (S25). According to embodiments, the feedback process (S25) may not be performed.

The head orientation information may mean information on the position, angle and movement of the user's head. Based on the information, information on an area currently viewed by the user in a point cloud video, that is, viewport information may be calculated.

The viewport information may be information on an area that the user is currently viewing in the point cloud video. A viewpoint is a point that a user views in a point cloud video, and it may mean a center point of a viewport area. That is, a viewport is an area centered at a viewpoint, and the size and shape occupied by the area may be determined by a field of view (FOV). Through gaze analysis using viewport information, how a user consumes a point cloud video, which area of the point cloud video the user gazes, and how long the user gazes the area may be identified. The gaze analysis may be performed on the receiving side (reception device) and be delivered to the transmitting side (transmission device) through a feedback channel. A device such as VR/AR/MR display may extract a viewport area based on the location/orientation of a user's head, a vertical or horizontal FOV supported by the device and the like.

According to embodiments, feedback information may not only be delivered to the transmitting side (transmission device) but also be consumed on the receiving side (reception device). That is, a decoding process and a rendering process on the receiving side (reception device) may be performed by using the feedback information.

For example, the reception device 20 may first decode and render only a point cloud video for an area currently viewed by a user by using head orientation information and/or viewport information. In addition, the reception unit 21 may receive all point cloud data or receive, based on orientation information and/or viewport information, point cloud data that the orientation information and/or viewport information represents. In addition, the decapsulation processing unit 22 may decapsulate all point cloud data or decapsulate, based on orientation information and/or viewport information, point cloud data that the orientation information and/or viewport information represents. In addition, the decoding unit 23 may decode all point cloud data or decode, based on orientation information and/or viewport information, point cloud data that the orientation information and/or viewport information represents.

### Overview of point cloud encoding apparatus

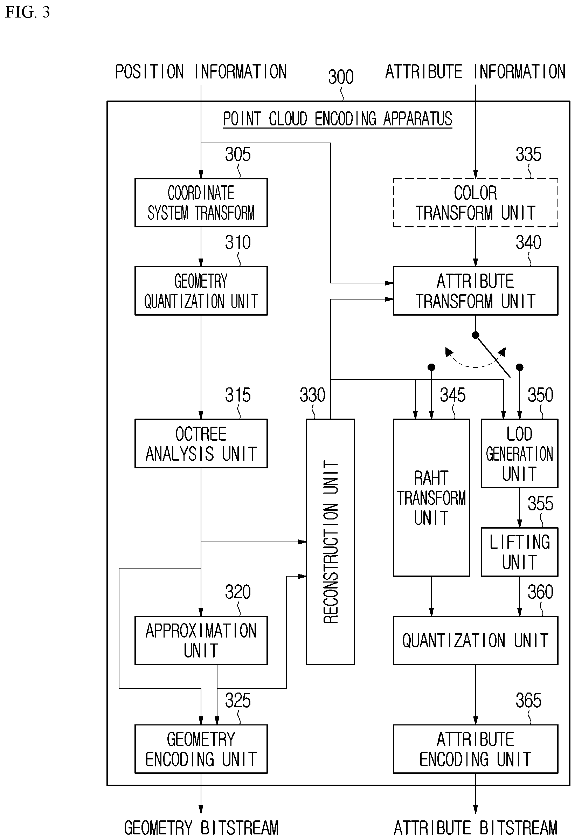

FIG. 3 illustrates an example of a point cloud encoding apparatus 300 according to embodiments of the present disclosure. The point cloud encoding apparatus 300 of FIG. 3 may correspond to the encoding unit 12 of FIG. 1 in terms of the configuration and function.

As shown in FIG. 3, the point cloud encoding apparatus 300 may include a coordinate system transform unit 305, a geometry quantization unit 310, an octree analysis unit 315, an approximation unit 320, a geometry encoding unit 325, a reconstruction unit 330, and an attribute transform unit 340, a RAHT transform unit 345, an LOD generation unit 350, a lifting unit 355, an attribute quantization unit 360, an attribute encoding unit 365, and/or a color transform unit 335.

The point cloud data obtained by the acquisition unit 11 may undergo processes of adjusting the quality of the point cloud content (e.g., lossless, lossy, near-lossless) according to the network situation or application. In addition, each point of the obtained point cloud content may be transmitted without loss, but, in that case, real-time streaming may not be possible because the size of the point cloud content is large. Therefore, in order to provide the point cloud content smoothly, a process of reconstructing the point cloud content according to a maximum target bitrate is required.

Processes of adjusting the quality of the point cloud content may be processes of reconstructing and encoding the position information (position information included in the geometry information) or color information (color information included in the attribute information) of the points. A process of reconstructing and encoding position information of points may be referred to as geometry coding, and a process of reconstructing and encoding attribute information associated with each point may be referred to as attribute coding.

Geometry coding may include a geometry quantization process, a voxelization process, an octree analysis process, an approximation process, a geometry encoding process, and/or a coordinate system transform process. Also, geometry coding may further include a geometry reconstruction process. Attribute coding may include a color transform process, an attribute transform process, a prediction transform process, a lifting transform process, a RAHT transform process, an attribute quantization process, an attribute encoding process, and the like.

### Geometry coding

The coordinate system transform process may correspond to a process of transforming a coordinate system for positions of points. Therefore, the coordinate system transform process may be referred to as "transform coordinates'. The coordinate system transform process may be performed by the coordinate system transform unit 305. For example, the coordinate system transform unit 305 may transform the positions of the points from the global space coordinate system to position information in a three-dimensional space (e.g., a three-dimensional space expressed in coordinate system of the X-axis, Y-axis, and Z-axis). Position information in the 3D space according to embodiments may be referred to as 'geometric information'.

The geometry quantization process may correspond to a process of quantizing the position information of points, and may be performed by the geometry quantization unit 310. For example, the geometry quantization unit 310 may find position information having minimum (x, y, z) values among the position information of the points, and subtract position information having the minimum (x, y, z) positions from the position information of each point. In addition, the geometry quantization unit 310 may multiply the subtracted value by a preset quantization scale value, and then adjust (lower or raise) the result to a near integer value, thereby performing the quantization process.

The voxelization process may correspond to a process of matching geometry information quantized through the quantization process to a specific voxel present in a 3D space. The voxelization process may also be performed by the geometry quantization unit 310. The geometry quantization unit 310 may perform octree-based voxelization based on position information of the points, in order to reconstruct each point to which the quantization process is applied.

Like a pixel that is a minimum unit with information on 2D image/video, a voxel may mean a space for storing information on points present in 3D space. 'Voxel' is a portmanteau word of volume and pixel.

One voxel does not necessarily have (or is not necessarily matched with) one point. That is, one voxel may have information related to a plurality of points. Alternatively, multiple pieces of information related to multiple points included in one voxel may be integrated into one piece of point information. Such adjustment may be selectively performed. In case one voxel is represented by one integrated piece of point information, a position value of a center point of the voxel may be set based on position values for points in the voxel, and a related attribute transform process needs to be performed. For example, an attribute transform process may be adjusted by an average value of color or reflectance of points included in a voxel or neighbor points within a specific radius of a position value for a center point of the voxel.

The octree analysis unit 315 may use an octree to efficiently manage an area/position of a voxel. An octree may be represented by an occupancy code. For example, if each node includes a point, the octree analysis unit 315 may express the occupancy code of the node by 1, and if a node includes no point, the octree analysis unit 315 may express the occupancy code of the node by 0.

The geometry encoding process may correspond to a process of performing entropy coding on the occupancy code. The geometry encoding process may be performed by the geometry encoding unit 325. The geometry encoding unit 325 may perform entropy coding on the occupancy code. The generated occupancy code may be immediately encoded or may be encoded through an intra/inter coding process to increase compression efficiency. The reception device 20 may reconstruct the octree through the occupancy code.

On the other hand, in the case of a specific area having no points or very few points, it may be inefficient to voxelize all areas. That is, since there are few points in a specific area, it may not be necessary to construct the entire octree. For this case, an early termination method may be required.

The point cloud encoding apparatus 300 may directly transmit the positions of points only for the specific area, or reconfigure positions of points within the specific area based on the voxel using a surface model, instead of partitioning a node (specific node) corresponding to this specific area into 8 sub-nodes (children nodes) for the specific area (a specific area that does not correspond to a leaf node).

A mode for directly transmitting the position of each point for a specific node may be a direct mode. The point cloud encoding apparatus 300 may check whether conditions for enabling the direct mode are satisfied.

The conditions for enabling the direct mode are: 1) the option to use the direct mode shall be enabled, 2) the specific node does not correspond to a leaf node, and 3) points below a threshold shall exist within the specific node, and 4) the total number of points to be directly transmitted does not exceed a limit value.

When all of the above conditions are satisfied, the point cloud encoding apparatus 300 may entropy-code and transmit the position value of the point directly for the specific node through the geometry encoding unit 325.

A mode in which a position of a point in a specific area is reconstructed based on a voxel using a surface model may be a trisoup mode. The trisoup mode may be performed by the approximation unit 320. The approximation unit 320 may determine a specific level of the octree and reconstruct the positions of points in the node area based on the voxel using the surface model from the determined specific level.

The point cloud encoding apparatus 300 may selectively apply the trisoup mode. Specifically, the point cloud encoding apparatus 300 may designate a level (specific level) to which the trisoup mode is applied, when the trisoup mode is used. For example, when the specified specific level is equal to the depth (d) of the octree, the trisoup mode may not be applied. That is, the designated specific level shall be less than the depth value of the octree.

A three-dimensional cubic area of nodes of the designated specific level is called a block, and one block may include one or more voxels. A block or voxel may correspond to a brick. Each block may have 12 edges, and the approximation unit 320 may check whether each edge is adjacent to an occupied voxel having a point. Each edge may be adjacent to several occupied voxels. A specific position of an edge adjacent to a voxel is called a vertex, and, when a plurality of occupied voxels are adjacent to one edge, the approximation unit 320 may determine an average position of the positions as a vertex.

The point cloud encoding apparatus 300 may entropy-code the starting points (x, y, z) of the edge, the direction vector (△x, △y, △z) of the edge and position value of the vertex (relative position values within the edge) through the geometry encoding unit 325, when a vertex is present.

The geometry reconstruction process may correspond to a process of generating a reconstructed geometry by reconstructing an octree and/or an approximated octree. The geometry reconstruction process may be performed by the reconstruction unit 330. The reconstruction unit 330 may perform a geometry reconstruction process through triangle reconstruction, up-sampling, voxelization, and the like.

When the trisoup mode is applied in the approximation unit 320, the reconstruction unit 330 may reconstruct a triangle based on the starting point of the edge, the direction vector of the edge and the position value of the vertex. The reconstruction unit 330 may perform an upsampling process for voxelization by adding points in the middle along the edge of the triangle. The reconstruction unit 330 may generate additional points based on an upsampling factor and the width of the block. These points may be called refined vertices. The reconstruction unit 330 may voxel the refined vertices, and the point cloud encoding apparatus 300 may perform attribute coding based on the voxelized position value.

In some embodiments, the geometry encoding unit 325 may increase compression efficiency by applying context adaptive arithmetic coding. The geometry encoding unit 325 may directly entropy-code the occupancy code using the arithmetic code. In some embodiments, the geometry encoding unit 325 adaptively performs encoding based on occupancy of neighbor nodes (intra coding), or adaptively performs encoding based on the occupancy code of a previous frame (inter-coding). Here, the frame may mean a set of point cloud data generated at the same time. Intra coding and inter coding are optional processes and thus may be omitted.

Depending on how many neighbor nodes are referred to, compression efficiency may be different, and as the number of bits increases, an encoding process becomes more complicated, but compression efficiency may also be improved by skewing bits to one side. For example, if a 3-bit context is given, 23 bits may have to be coded in 8 parts. Because divided coding parts may affect complexity of implementation, the efficiency of compression and a suitable level of complexity need to be balanced.

### Attribute coding

Attribute coding may correspond to a process of coding attribute information based on reconstructed geometry and geometry before coordinate system transform (source geometry). Since the attribute may be dependent on the geometry, the reconstructed geometry may be utilized for attribute coding.

As described above, the attribute may include color, reflectance, and the like. The same attribute coding method may be applied to information or parameters included in the attribute. Color has three elements, reflectance has one element, and each element can be processed independently.

Attribute coding may include a color transform process, an attribute transform process, a prediction transform process, a lifting transform process, a RAHT transform process, an attribute quantization process, an attribute encoding process, and the like. The prediction transform process, the lifting transform process, and the RAHT transform process may be selectively used, or a combination of one or more thereof may be used.

The color transform process may correspond to a process of transforming the format of the color in the attribute into another format. The color transform process may be performed by the color transform unit 335. That is, the color transform unit 335 may transform the color in the attribute. For example, the color transform unit 335 may perform a coding operation for transforming the color in the attribute from RGB to YCbCr. In some embodiments, the operation of the color transform unit 335, that is, the color transform process, may be optionally applied according to a color value included in the attribute.

As described above, when one or more points exist in one voxel, position values for points existing in the voxel are set to the center point of the voxel in order to display them by integrating them into one point information for the voxel. Accordingly, a process of transforming the values of attributes related to the points may be required. Also, even when the trisoup mode is performed, the attribute transform process may be performed.

The attribute transform process may correspond to a process of transforming the attribute based on a position on which geometry coding is not performed and/or reconstructed geometry. For example, the attribute transform process may correspond to a process of transforming the attribute having a point of the position based on the position of a point included in a voxel. The attribute transform process may be performed by the attribute transform unit 340.

The attribute transform unit 340 may calculate the central position value of the voxel and an average value of the attribute values of neighbor points within a specific radius. Alternatively, the attribute transform unit 340 may apply a weight according to a distance from the central position to the attribute values and calculate an average value of the attribute values to which the weight is applied. In this case, each voxel has a position and a calculated attribute value.

The prediction transform process may correspond to a process of predicting an attribute value of a current point based on attribute values of one or more points (neighbor points) adjacent to the current point (a point corresponding to a prediction target). The prediction transform process may be performed by a level-of-detail (LOD) generation unit 350.

Prediction transform is a method to which the LOD transform technique is applied, and the LOD generation unit 350 may calculate and set the LOD value of each point based on the LOD distance value of each point. Points with a lowest LOD may be sparsely distributed, and points with a highest LOD may be densely distributed. That is, the higher the LOD, the shorter the spacing (or distance) between points may be.

Each point present in a point cloud may be separated according to each LOD, and points constituting each LOD may include points belonging to a lower LOD than the LOD. For example, points constituting LOD 2 may include all points belonging to LOD 1 and LOD 2. Points may be rearranged according to each LOD, and a higher LOD may include points belonging to a lower LOD.

The LOD generation unit 350 may generate a predictor for each point for prediction transform. Accordingly, when there are N points, N predictors may be generated. The predictor may calculate and set a weight value (= 1/distance) based on the LOD value for each point, the indexing information for the neighbor points, and distance values from the neighbor points. Here, the neighbor points may be points existing within a distance set for each LOD from the current point.

In addition, the predictor may multiply the attribute values of neighbor points by the 'set weight value', and set a value obtained by averaging the attribute values multiplied by the weight value as the predicted attribute value of the current point. An attribute quantization process may be performed on a residual attribute value obtained by subtracting the predicted attribute value of the current point from the attribute value of the current point.

The lifting transform process may correspond to a process of reconstructing points into a set of detail levels through the LOD generation process, like the prediction transform process. The lifting transform process may be performed by the lifting unit 355. The lifting transform process may also include a process of generating a predictor for each point, a process of setting the calculated LOD in the predictor, a process of registering neighbor points, and a process of setting a weight according to distances between the current point and the neighbor points.

The RAHT transform process may correspond to a method of predicting attribute information of nodes at a higher level using attribute information associated with a node at a lower level of the octree. That is, the RATH transform process may correspond to an attribute information intra coding method through octree backward scan. The RAHT transform process may be performed by the RAHT transform unit 345.

The RAHT transform unit 345 scans the entire area in the voxel, and may perform the RAHT transform process up to the root node while summing (merging) the voxel into a larger block at each step. Since the RAHT transform unit 345 performs a RAHT transform process only on an occupied node, in the case of an empty node that is not occupied, the RAHT transform process may be performed on a node at a higher level immediately above it.

The attribute quantization process may correspond to a process of quantizing the attribute output from the RAHT transform unit 345, the LOD generation unit 350, and/or the lifting unit 355. The attribute quantization process may be performed by the attribute quantization unit 360. The attribute encoding process may correspond to a process of encoding a quantized attribute and outputting an attribute bitstream. The attribute encoding process may be performed by the attribute encoding unit 365.

For example, when a predicted attribute value of a current point is calculated from the LOD generation unit 350, the attribute quantization unit 360 may quantize a residual attribute value that is obtained by subtracting the predicted attribute value of the current point from an attribute value of the current point.

If there is no neighbor point in the predictor of each point, the attribute encoding unit 365 itself may entropy-encode the attribute value (non-quantized attribute value) of the current point. On the other hand, if there are neighbor points in the predictor of the current points, the attribute encoding unit 365 may entropy-encode the quantized residual attribute value.

As another example, if the lifting unit 355 outputs a product of an updated attribute value from a lift update process and an updated (QW-stored) weight from a lift prediction process, the attribute quantization unit 360 may quantize the result (the product), and the attribute encoding unit 365 may entropy-encode the quantized value.

### Overview of point cloud decoding apparatus

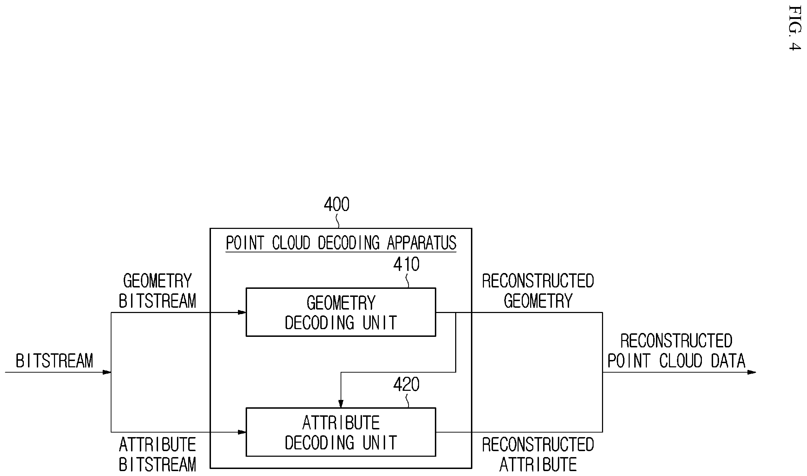

FIG. 4 illustrates an example of a point cloud decoding apparatus 400 according to an embodiment of the present disclosure. The point cloud decoding apparatus 400 of FIG. 4 may correspond to the decoding unit 23 of FIG. 1 in terms of configuration and function.

The point cloud decoding apparatus 400 may perform a decoding process based on data (bitstream) transmitted from the transmission device 10. The decoding process may include a process of reconstructing (decoding) a point cloud video by performing operation corresponding to the above-described encoding operation on the bitstream.

As illustrated in FIG. 4, the decoding process may include a geometry decoding process and an attribute decoding process. The geometry decoding process may be performed by a geometry decoding unit 410, and an attribute decoding process may be performed by an attribute decoding unit 420. That is, the point cloud decoding apparatus 400 may include the geometry decoding unit 410 and the attribute decoding unit 420.

The geometry decoding unit 410 may reconstruct geometry from a geometry bitstream, and the attribute decoder 420 may reconstruct attribute based on the reconstructed geometry and the attribute bitstream. Also, the point cloud decoding apparatus 400 may reconstruct a three-dimensional point cloud video (point cloud data) based on position information according to the reconstructed geometry and attribute information according to the reconstructed attribute.

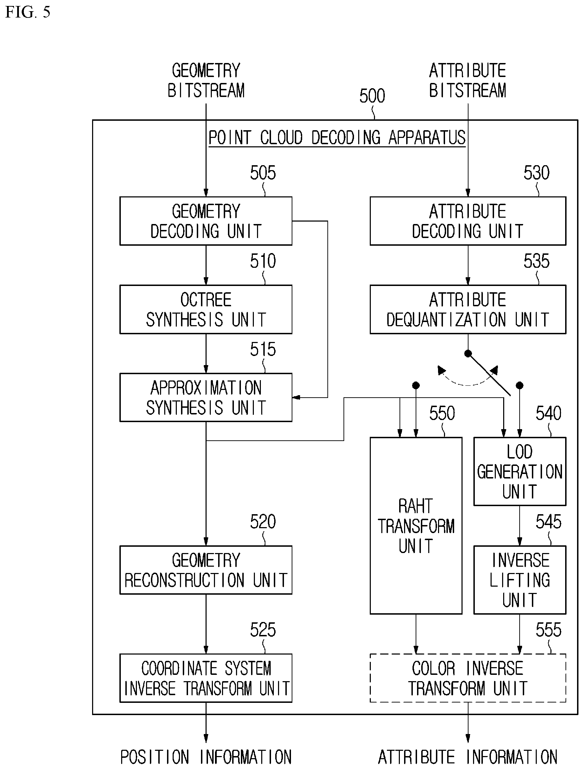

FIG. 5 illustrates a specific example of a point cloud decoding apparatus 500 according to another embodiment of the present disclosure. As illustrated in FIG. 5, the point cloud decoding apparatus 500 includes a geometry decoding unit 505, an octree synthesis unit 510, an approximation synthesis unit 515, a geometry reconstruction unit 520, and a coordinate system inverse transform unit 525, an attribute decoding unit 530, an attribute inverse quantization unit 535, a RATH transform unit 550, an LOD generation unit 540, an inverse lifting unit 545, and/or a color inverse transform unit 555.

The geometry decoding unit 505, the octree synthesis unit 510, the approximation synthesis unit 515, the geometry reconstruction unit 520 and the coordinate system inverse transform unit 550 may perform geometry decoding. Geometry decoding may be performed as a reverse process of the geometry coding described with reference to FIGS. 1 to 3. Geometry decoding may include direct coding and trisoup geometry decoding. Direct coding and trisoup geometry decoding may be selectively applied.

The geometry decoding unit 505 may decode the received geometry bitstream based on arithmetic coding. Operation of the geometry decoding unit 505 may correspond to a reverse process of operation performed by the geometry encoding unit 325.

The octree synthesis unit 510 may generate an octree by obtaining an occupancy code from the decoded geometry bitstream (or information on a geometry obtained as a result of decoding). Operation of the octree synthesis unit 510 may correspond to a reverse process of operation performed by the octree analysis unit 515.

The approximation synthesis unit 515 may synthesize a surface based on the decoded geometry and/or the generated octree, when trisoup geometry encoding is applied.

The geometry reconstruction unit 520 may reconstruct geometry based on the surface and the decoded geometry. When direct coding is applied, the geometry reconstruction unit 520 may directly bring and add position information of points to which direct coding is applied. In addition, when trisoup geometry encoding is applied, the geometry reconstruction unit 520 may reconstruct the geometry by performing reconstruction operation, for example, triangle reconstruction, up-sampling, voxelization operation and the like. The reconstructed geometry may include a point cloud picture or frame that does not include attributes.

The coordinate system inverse transform unit 550 may obtain positions of points by transforming the coordinate system based on the reconstructed geometry. For example, the coordinate system inverse transform unit 550 may inversely transform the positions of points from a three-dimensional space (e.g., a three-dimensional space expressed by the coordinate system of X-axis, Y-axis, and Z-axis, etc.) to position information of the global space coordinate system.

The attribute decoding unit 530, the attribute inverse quantization unit 535, the RATH transform unit 530, the LOD generation unit 540, the inverse lifting unit 550 and/or the color inverse transform unit 550 may perform attribute decoding. Attribute decoding may include RAHT transform decoding, predictive transform decoding, and lifting transform decoding. The above three types of decoding may be selectively used, or a combination of one or more types of decoding may be used.

The attribute decoding unit 530 may decode an attribute bitstream based on arithmetic coding. For example, when there is no neighbor point in the predictor of each point and thus the attribute value of the current point is directly entropy-encoded, the attribute decoding unit 530 may decode the attribute value (non-quantized attribute value) of the current point. As another example, when there are neighbor points in the predictor of the current points and thus the quantized residual attribute value is entropy-encoded, the attribute decoding unit 530 may decode the quantized residual attribute value.

The attribute inverse quantization unit 535 may dequantize the decoded attribute bitstream or information on the attribute obtained as a result of decoding, and output dequantized attributes (or attribute values). For example, when the quantized residual attribute value is output from the attribute decoding unit 530, the attribute inverse quantization unit 535 may dequantize the quantized residual attribute value to output the residual attribute value. The dequantization process may be selectively applied based on whether the attribute is encoded in the point cloud encoding apparatus 300. That is, when there is no neighbor point in the predictor of each point and thus the attribute value of the current point is directly encoded, the attribute decoding unit 530 may output the attribute value of the current point that is not quantized, and the attribute encoding process may be skipped.

The RATH transform unit 550, the LOD generation unit 540, and/or the inverse lifting unit 545 may process the reconstructed geometry and dequantized attributes. The RATH transform unit 550, the LOD generation unit 540, and/or the inverse lifting unit 545 may selectively perform decoding operation corresponding to the encoding operation of the point cloud encoding apparatus 300.

The color inverse transform unit 555 may perform inverse transform coding for inverse transforming s color value (or texture) included in the decoded attributes. Operation of the inverse color transform unit 555 may be selectively performed based on whether the color transform unit 335 operates.

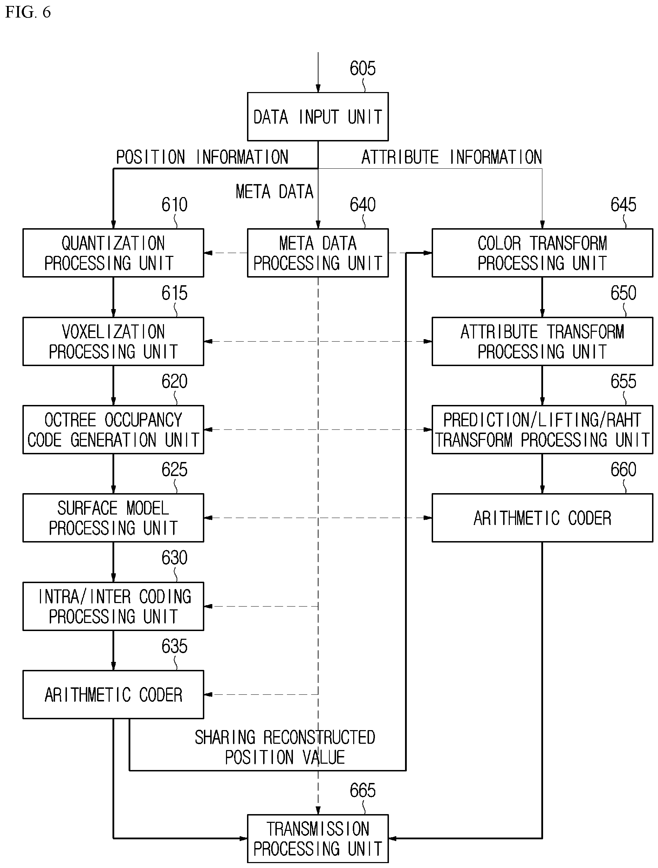

FIG. 6 illustrates another example of a transmission device according to embodiments of the present disclosure. As exemplified in FIG. 6, the transmission device may include a data input unit 605, a quantization processing unit 610, a voxelization processing unit 615, an octree occupancy code generation unit 620, a surface model processing unit 625, an intra/inter coding processing unit 630, an arithmetic coder 635, a metadata processing unit 640, a color transform processing unit 645, a property transform processing unit 650, a prediction/lifting/RAHT transform processing unit 655, an arithmetic coder 660, and a transmission processing unit 665.

The function of the data input unit 605 may correspond to an acquisition process performed by the acquisition unit 11 of FIG. 1. That is, the data input unit 605 may obtain a point cloud video and generate point cloud data for a plurality of points. Geometry information (position information) in point cloud data may be generated in a geometry bitstream form through the quantization processing unit 610, the voxelization processing unit 615, the octree occupancy code generation unit 620, the surface model processing unit 625, the intra/inter coding processing unit 630 and the arithmetic coder 635. Attribute information in point cloud data may be generated in an attribute bitstream form through the color transform processing unit 645, the property transform processing unit 650, the prediction/lifting/RAHT transform processing unit 655, and the arithmetic coder 660. A geometry bitstream, an attribute bitstream and/or a metadata bitstream may be transmitted to a reception device through processing of the transmission processing unit 665.

Specifically, the function of the quantization processing unit 610 may correspond to a quantization process performed by the geometry quantization unit 310 of FIG. 3 and/or the function of the coordinate system transform unit 305. The function of the voxelization processing unit 615 may correspond to a voxelization process performed by the geometry quantization unit 310 of FIG. 3, and the function of the octree occupancy code generation unit 620 may correspond to the function performed by the octree analysis unit 315 of FIG. 3. The function of the surface model processing unit 625 may correspond to the function performed by the approximation unit 320 of FIG. 3, and the function of the intra/inter coding processing unit 630 and the function of the arithmetic coder 635 may correspond to the function performed by the geometry encoding unit 325 of FIG. 3. The function of the metadata processing unit 640 may correspond to a function of the metadata processing unit described in FIG. 1.

In addition, the function of the color transform processing unit 645 may correspond to the function performed by the color transform unit 335 of FIG. 3, and the function of the property transform processing unit 650 may correspond to the function performed by the attribute transform unit 340 of FIG. 3. The function of the prediction/lifting/RAHT transform processing unit 655 may correspond to the function performed by the RAHT transform unit 345, the LOD generation unit 350 and the lifting unit 355 of FIG. 3, and the function of the arithmetic coder 660 may correspond to the function of the attribute encoding unit 365 of FIG. 3. The function of the transmission processing unit 665 may correspond to the function performed by the transmission unit 14 and/or the encapsulation processing unit 13 of FIG. 1.

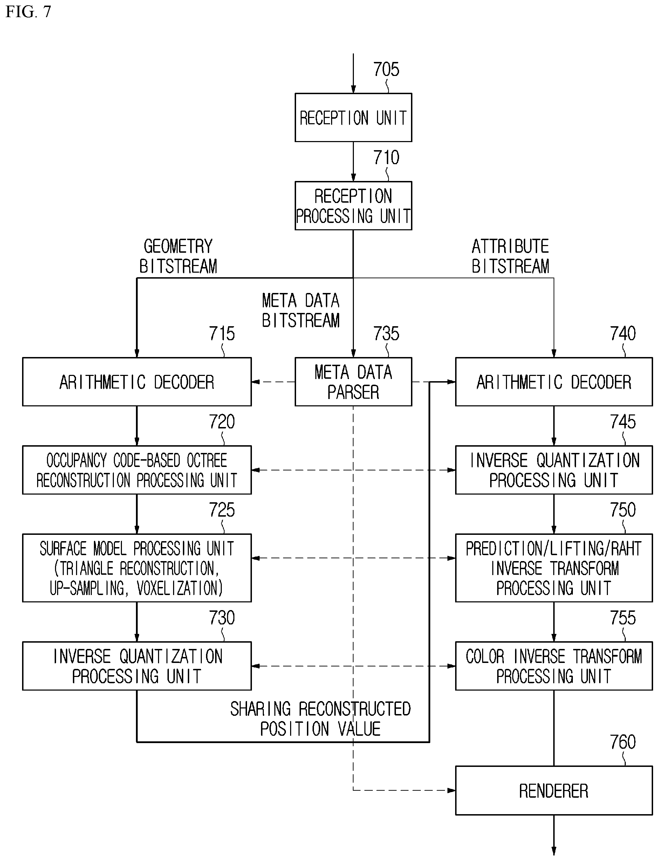

FIG. 7 illustrates another example of a reception device according to embodiments of the present disclosure. As exemplified in FIG. 7, a reception device may include a reception unit 705, a reception processing unit 710, an arithmetic decoder 715, a metadata parser 735, an occupancy code-based octree reconstruction processing unit 720, a surface model processing unit 725, an inverse quantization processing unit 730, an arithmetic decoder 740, an inverse quantization processing unit 745, a prediction/lifting/RAHT inverse transform processing unit 750, a color inverse transform processing unit 755, and a renderer 760.

The function of the reception unit 705 may correspond to the function performed by the reception unit 21 of FIG. 1, and the function of the reception processing unit 710 may correspond to the function performed by the decapsulation processing unit 22 of FIG. 1. That is, the reception unit 705 may receive a bitstream from a transmission processing unit 765, and the reception processing unit 710 may extract a geometry bitstream, an attribute bitstream and/or a metadata bitstream through decapsulation processing. The geometry bitstream may be generated as a reconstructed (restored) position value (position information)d through the arithmetic decoder 715, the occupancy code-based octree reconstruction processing unit 720, the surface model processing unit 725, and the inverse quantization processing unit 730, The attribute bitstream may be generated as a reconstructed attribute value through the arithmetic decoder 740, the inverse quantization processing unit 745, the prediction/lifting/RAHT inverse transform processing unit 750, and the color inverse transform processing unit 755. The metadata bitstream may be generated as reconstructed metadata (or metadata information) through the metadata parser 735. The position value, the attribute value and/or the metadata may be rendered in the renderer 760 and provide a user with experience such as VR/AR/MR/self-driving.

Specifically, the function of the arithmetic decoder 715 may correspond to the function performed by the geometry decoding unit 506 of FIG. 5, and the function of the occupancy code-based octree reconstruction processing unit 720 may correspond to the function performed by the octree synthesis unit 510 of FIG. 5. The function of the surface model processing unit 725 may correspond to the function performed by the approximation synthesis unit of FIG. 5, and the function of the inverse quantization processing unit 730 may correspond to the function performed by the geometry reconstruction unit 520 and/or the coordinate system inverse transform unit 525. The function of the metadata parser 735 may correspond to the function of the metadata parsing unit described in FIG. 1.

In addition, the function of the arithmetic decoder 740 may correspond to the function performed by the attribute decoding unit 530 of FIG. 5, and the function of the inverse quantization processing unit 745 may correspond to the function of the attribute inverse transform unit 535 of FIG. 5. The function of the prediction/lifting/RAHT inverse transform processing unit 750 may correspond to the functions performed by the RAHT transform unit 550, the LOD generation unit 540 and the inverse lifting unit 545 of FIG. 5, and the function of the color inverse transform processing unit 755 may correspond to the function performed by the color inverse transform unit 555 of FIG. 5.

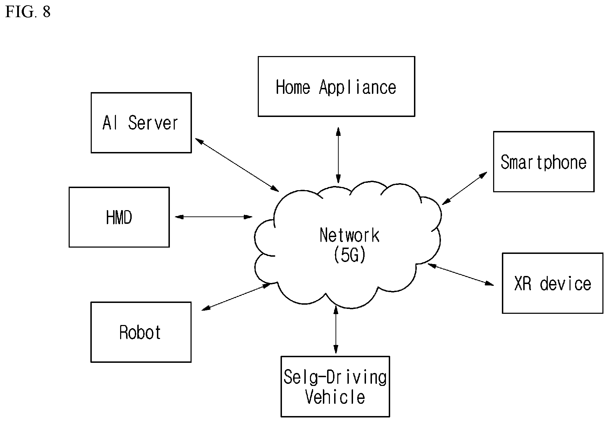

FIG. 8 illustrates an example of a structure capable of interworking with a method/device for transmitting and receiving point cloud data according to embodiments of the present disclosure.

The structure of FIG. 8 illustrates a configuration in which at least one of a server (AI Server), a robot, a self-driving vehicle, an XR device, a smartphone, a home appliance and/ or a HMD is connected to a cloud network. The robot, the self-driving vehicle, the XR device, the smartphone, or the home appliance may be referred to as a device. In addition, the XR device may correspond to a point cloud data device (PCC) according to embodiments or may interwork with the PCC device.

The cloud network may refer to a network that forms part of the cloud computing infrastructure or exists within the cloud computing infrastructure. Here, the cloud network may be configured using a 3G network, a 4G or Long Term Evolution (LTE) network, or a 5G network.

The server may be connected to at least one of the robot, the self-driving vehicle, the XR device, the smartphone, the home appliance, and/or the HMD through a cloud network, and may help at least a part of processing of the connected devices.

The HMD may represent one of the types in which an XR device and/or the PCC device according to embodiments may be implemented. The HMD type device according to the embodiments may include a communication unit, a control unit, a memory unit, an I/O unit, a sensor unit, and a power supply unit.

### <PCC+XR>

The XR/PCC device may be implemented by a HMD, a HUD provided in a vehicle, a TV, a mobile phone, a smartphone, a computer, a wearable device, a home appliance, a digital signage, a vehicle, a fixed robot or a mobile robot, etc., by applying PCC and/or XR technology.

The XR/PCC device may obtain information on a surrounding space or a real object by analyzing 3D point cloud data or image data obtained through various sensors or from an external device to generate position (geometric) data and attribute data for 3D points, and render and output an XR object to be output. For example, the XR/PCC device may output an XR object including additional information on the recognized object in correspondence with the recognized object.

### <PCC+XR+mobile phone>

The XR/PCC device may be implemented by a mobile phone or the like by applying PCC technology. A mobile phone can decode and display point cloud content based on PCC technology.

### <PCC+self-driving+XR>

The self-driving vehicle may be implemented by a mobile robot, a vehicle, an unmanned aerial vehicle, etc. by applying PCC technology and XR technology. The self-driving vehicle to which the XR/PCC technology is applied may mean a self-driving vehicle equipped with a unit for providing an XR image or a self-driving vehicle which is subjected to control/interaction within the XR image. In particular, the self-driving vehicle which is subjected to control/interaction within the XR image is distinguished from the XR device and may be interwork with each other.

The self-driving vehicle equipped with a unit for providing an XR/PCC image may obtain sensor information from sensors including a camera, and output an XR/PCC image generated based on the obtained sensor information. For example, the self-driving vehicle has a HUD and may provide a passenger with an XR/PCC object corresponding to a real object or an object in a screen by outputting an XR/PCC image.

In this case, when the XR/PCC object is output to the HUD, at least a portion of the XR/PCC object may be output so as to overlap an actual object to which a passenger's gaze is directed. On the other hand, when the XR/PCC object is output to a display provided inside the self-driving vehicle, at least a portion of the XR/PCC object may be output to overlap the object in the screen. For example, the self-driving vehicle may output XR/PCC objects corresponding to objects such as a lane, other vehicles, traffic lights, traffic signs, two-wheeled vehicles, pedestrians, and buildings.

The VR technology, AR technology, MR technology, and/or PCC technology according to the embodiments are applicable to various devices. That is, VR technology is display technology that provides objects or backgrounds in the real world only as CG images. On the other hand, AR technology refers to technology that shows a virtual CG image on top of an actual object image. Furthermore, MR technology is similar to AR technology described above in that a mixture and combination of virtual objects in the real world is shown. However, in AR technology, the distinction between real objects and virtual objects made of CG images is clear, and virtual objects are used in a form that complements the real objects, whereas, in MR technology, virtual objects are regarded as equivalent to real objects unlike the AR technology. More specifically, for example, applying the MR technology described above is a hologram service. VR, AR and MR technologies may be integrated and referred to as XR technology.

### Space partition

Point cloud data (i.e., G-PCC data) may represent volumetric encoding of a point cloud consisting of a sequence of frames (point cloud frames). Each point cloud frame may include the number of points, the positions of the points, and the attributes of the points. The number of points, the positions of the points, and the attributes of the points may vary from frame to frame. Each point cloud frame may mean a set of three-dimensional points specified by zero or more attributes and Cartesian coordinates (x, y, z) of three-dimensional points in a particular time instance. Here, the Cartesian coordinates (x, y, z) of the three-dimensional points may be a position or a geometry.

In some embodiments, the present disclosure may further perform a space partition process of partitioning the point cloud data into one or more 3D blocks before encoding the point cloud data. The 3D block may mean whole or part of a 3D space occupied by the point cloud data. The 3D block may be one or more of a tile group, a tile, a slice, a coding unit (CU), a prediction unit (PU), or a transform unit (TU).

A tile corresponding to a 3D block may mean whole or part of the 3D space occupied by the point cloud data. Also, a slice corresponding to a 3D block may mean whole or part of a 3D space occupied by the point cloud data. A tile may be partitioned into one or more slices based on the number of points included in one tile. A tile may be a group of slices with bounding box information. The bounding box information of each tile may be specified in a tile inventory (or a tile parameter set, a tile parameter set (TPS)). A tile may overlap another tile in the bounding box. A slice may be a unit of data on which encoding is independently performed, or a unit of data on which decoding is independently performed. That is, a slice may be a set of points that may be independently encoded or decoded. In some embodiments, a slice may be a series of syntax elements representing part or whole of a coded point cloud frame. Each slice may include an index for identifying a tile to which the slice belongs.

The spatially partitioned 3D blocks may be processed independently or non-independently. For example, spatially partitioned 3D blocks may be encoded or decoded independently or non-independently, respectively, and may be transmitted or received independently or non-independently, respectively. In addition, the spatially partitioned 3D blocks may be quantized or dequantized independently or non-independently, and may be transformed or inversely transformed independently or non-independently, respectively. In addition, spatially partitioned 3D blocks may be rendered independently or non-independently. For example, encoding or decoding may be performed in units of slices or units of tiles. In addition, quantization or dequantization may be performed differently for each tile or slice, and may be performed differently for each transformed or inversely transformed tile or slice.

In this way, when the point cloud data is spatially partitioned into one or more 3D blocks and the spatially partitioned 3D blocks are processed independently or non-independently, the process of processing the 3D blocks is performed in real time and the process is performed with low latency. In addition, random access and parallel encoding or parallel decoding in a three-dimensional space occupied by point cloud data may be enabled, and errors accumulated in the encoding or decoding process may be prevented.

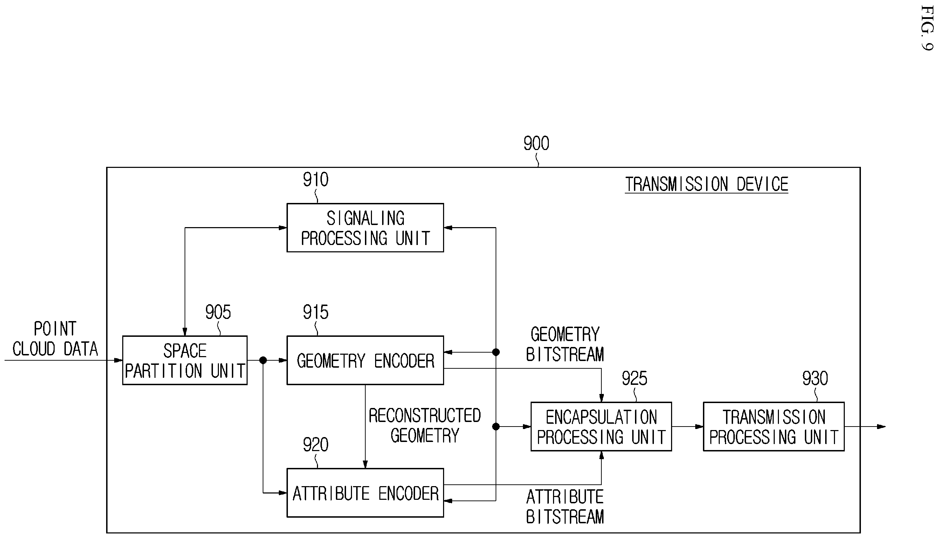

FIG. 9 is a block diagram illustrating an example of a transmission device 900 for performing a space partition process according to embodiments of the present disclosure. As illustrated in FIG. 9, the transmission device 900 may include a space partition unit 905 for performing a space partition process, a signaling processing unit 910, a geometry encoder 915, an attribute encoder 920, and an encapsulation processing unit 925 and/or a transmission processing unit 930.

The space partition unit 905 may perform a space partition process of partitioning the point cloud data into one or more 3D blocks based on a bounding box and/or a sub-bounding box. Through the space partition process, point cloud data may be partitioned into one or more tiles and/or one or more slices. In some embodiments, the point cloud data may be partitioned into one or more tiles, and each partitioned tile may be further partitioned into one or more slices, through a space partition process.

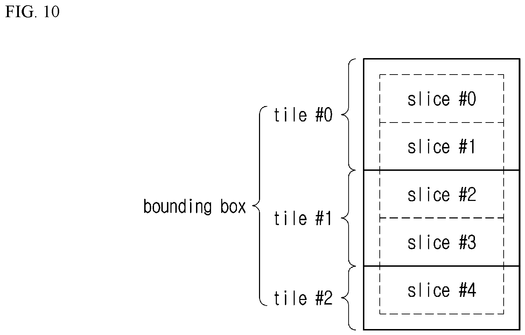

FIG. 10 illustrates an example of spatially partitioning a bounding box (that is, point cloud data) into three-dimensional blocks. As exemplified in FIG. 10, an overall bounding box of point cloud data may be partitioned into three tiles, that is, a tile #0, a tile #1, and a tile #2. In addition, the tile #0 may be partitioned again into two slices, that is, a slice #0 and a slice #1. In addition, the tile #1 may be partitioned again into two slices, that is, a slice #2 and a slice #3. In addition, the tile #2 may be partitioned again into a slice #4.

The signaling processing unit 910 may generate and/or process (e.g., entropy-encode) signaling information and output it in the form of a bitstream. Hereinafter, a bitstream (in which signaling information is encoded) output from the signaling processing unit is referred to as a 'signaling bitstream'. The signaling information may include information for space partition or information on space partition. That is, the signaling information may include information related to the space partition process performed by the space partition unit 905.

When the point cloud data is partitioned into one or more 3D blocks, information for decoding some point cloud data corresponding to a specific tile or a specific slice among the point cloud data may be required. In addition, in order to support spatial access (or partial access) to point cloud data, information related to 3D spatial areas may be required. Here, the spatial access may mean extracting, from a file, only necessary partial point cloud data in the entire point cloud data. The signaling information may include information for decoding some point cloud data, information related to 3D spatial areas for supporting spatial access, and the like. For example, the signaling information may include 3D bounding box information, 3D spatial area information, tile information, and/or tile inventory information.

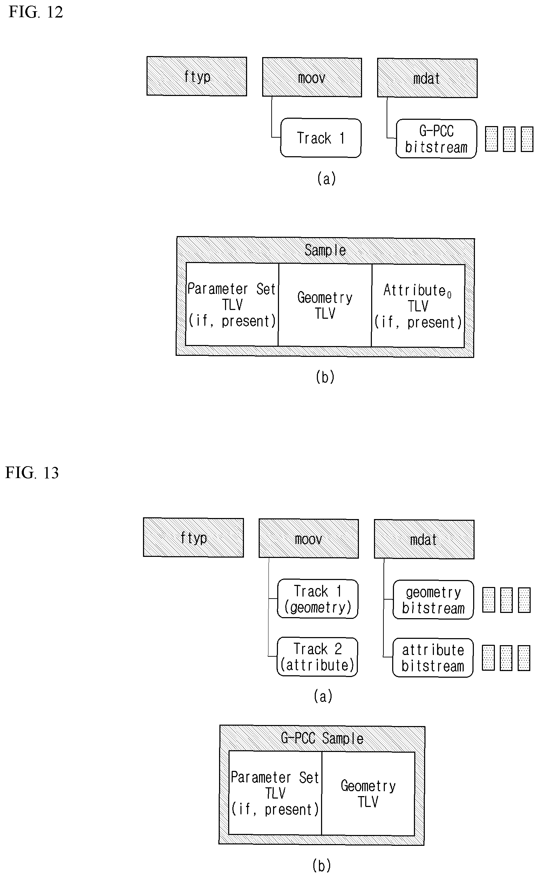

The signaling information may be provided from the space partition unit 905, the geometry encoder 915, the attribute encoder 920, the transmission processing unit 925, and/or the encapsulation processing unit 930. In addition, the signaling processing unit 910 may provide the feedback information fed back from the reception device 700 of FIG. 13 to the space partition unit 905, the geometry encoder 915, the attribute encoder 920, the transmission processing unit 925 and/or the encapsulation processing unit 930.

The signaling information may be stored and signaled in a sample in a track, a sample entry, a sample group, a track group, or a separate metadata track. In some embodiments, the signaling information may be signaled in units of sequence parameter sets (SPSs) for signaling of a sequence level, geometry parameter sets (GPSs) for signaling of geometry coding information, and attribute parameter sets (APSs) for signaling of attribute coding information, tile parameter sets (TPSs) (or tile inventory) for signaling of a tile level, etc. In addition, signaling information may be signaled in a coding unit such as a slice or a tile.

Meanwhile, positions (position information) of the 3D blocks may be output to the geometry encoder 915, and attributes (attribute information) of the 3D blocks may be output to the attribute encoder 920.

The geometry encoder 915 may construct an octree based on the position information, encode the constructed octree, and output a geometry bitstream. Also, the geometry encoder 915 may reconstruct the octree and/or the approximated octree and output it to the attribute encoder 920. The reconstructed octree may be reconstructed geometry. The geometry encoder 915 may perform all or some of operations performed by the coordinate system transform unit 305, the geometry quantization unit 310, the octree analysis unit 315, the approximation unit 320, the geometry encoding unit 325 and/or the reconstruction unit 330 of FIG. 3. According to embodiments, the geometry encoder 915 may perform all or some of the operations performed by the quantization processing unit 610, the voxelization processing unit 615, the octree occupancy code generation unit 620, the surface model processing unit 625, the intra/inter coding processing unit 630 and/or the arithmetic coder 635 of FIG. 6.

The attribute encoder 920 may output an attribute bitstream by encoding an attribute based on the reconstructed geometry. The attribute encoder 920 may perform all or some of operations performed by the attribute transform unit 340, the RAHT transform unit 345, the LOD generation unit 350, the lifting unit 355, the attribute quantization unit 360, the attribute encoding unit 365 and/or the color transform nit 335 of FIG. 3. According to embodiments, the attribute encoder 920 may perform all or some of operations performed by the property transform processing unit 650, the prediction/lifting/RAHT transform processing unit 655, the arithmetic coder 660, and/or the color transform processing unit 645 of FIG. 6.

The encapsulation processing unit 925 may encapsulate one or more input bitstreams into a file or segment. For example, the encapsulation processing unit 925 may encapsulate each of the geometry bitstream, the attribute bitstream, and the signaling bitstream, or multiplex and encapsulate the geometry bitstream, the attribute bitstream, and the signaling bitstream. In some embodiments, the encapsulation processing unit 925 may encapsulate a bitstream (G-PCC bitstream) consisting of a sequence of a type-length-value (TLV) structure into a file. TLV (or TLV encapsulation) structures constituting the G-PCC bitstream may include a geometry bitstream, an attribute bitstream, a signaling bitstream, and the like. In some embodiments, the G-PCC bitstream may be generated by the encapsulation processing unit 925 or generated by the transmission processing unit 930. The TLV structure or the TLV encapsulation structure will be described in detail below. In some embodiments, the encapsulation processing unit 925 may perform all or some of operations performed by the encapsulation processing unit 13 of FIG. 1.

The transmission processing unit 930 may process an encapsulated bitstream or a file/segment according to an arbitrary transport protocol. The transmission processing unit 930 may perform all or some of the operations performed by the transmission unit 14 and the transmission processing unit described with reference to FIG. 1 or the transmission processing unit 665 of FIG. 6.

FIG. 11 is a block diagram illustrating an example of a reception device 1100 according to embodiments of the present disclosure. The reception device 1100 may perform operations corresponding to the operations of the transmission device 900 for performing space partition. As illustrated in FIG. 11, the reception device 1100 may include a reception processing unit 1105, a decapsulation processing unit 1110, a signaling processing unit 1115, a geometry decoder 1120, an attribute encoder 1125, and/or a post-processing unit 1130.

The reception processing unit 1105 may receive a file/segment in which a G-PCC bitstream is encapsulated, a G-PCC bitstream, or a bitstream, and may process it according to a transport protocol. The reception processing unit 1105 may perform all or some of the operations performed by the reception unit 21 and the reception processing unit described with reference to FIG. 1 or the reception processing unit 710 of FIG. 7.

The decapsulation processing unit 1110 may obtain a G-PCC bitstream by performing a reverse process of operations performed by the encapsulation processing unit 925. The decapsulation processing unit 1110 may obtain a G-PCC bitstream by decapsulating the file/segment. For example, the decapsulation processing unit 1110 may obtain and output a signaling bitstream to the signaling processing unit 1115, obtain and output a geometry bitstream to the geometry decoder 1120, and obtain and output an attribute bitstream to the attribute decoder 1125. The decapsulation processing unit 1110 may perform all or some of the operations performed by the decapsulation processing unit 22 of FIG. 1 or the reception processing unit 710 of FIG. 7.

The signaling processing unit 1115 may parse and decode signaling information by performing a reverse process of operations performed by the signaling processing unit 910. The signaling processing unit 1115 may parse and decode signaling information from a signaling bitstream. The signaling processing unit 1115 may provide the decoded signaling information to the geometry decoder 1120, the attribute decoder 1125, and/or the post-processing unit 1130.

The geometry decoder 1120 may reconstruct geometry from the geometry bitstream by performing a reverse process of operations performed by the geometry encoder 915. The geometry decoder 1120 may reconstruct geometry based on signaling information (parameters related to the geometry). The reconstructed geometry may be provided to the attribute decoder 1125.

The attribute decoder 1125 may reconstruct attribute from the attribute bitstream by performing a reverse process of the operations performed by the attribute encoder 920. The attribute decoder 1125 may reconstruct the attribute based on the signaling information (parameters related to the attribute) and the reconstructed geometry.

The post-processing unit 1130 may reconstruct point cloud data based on the reconstructed geometry and the reconstructed attribute. Reconstruction of point cloud data may be performed through a process of matching the reconstructed geometry with the reconstructed attribute. In some embodiments, when the reconstructed point cloud data is in units of tiles and/or slices, the post-processing unit 1130 may reconstruct the bounding box of the point cloud data, by performing a reverse process of the space partition process of the transmission device 900 based on signaling information. In some embodiments, when the bounding box is partitioned into a plurality of tiles and/or a plurality of slices through a space partition process, the post-processing unit 1130 may reconstruct part of the bounding box, by combining some slices and/or some tiles based on the signaling information. Here, some slices and/or some tiles used to reconstruct the bounding box may be slices and/or some tiles related to a 3D spatial area in which spatial access is desired.

### Encapsulation/decapsulation

A TLV encapsulation structure may be generated in a transmission unit, a transmission processing unit, and an encapsulation unit, which are mentioned in the present specification. A G-PCC bitstream composed of TLV encapsulation structures may be transmitted to a reception device as it is or be encapsulated and transmitted to the reception device. For example, the encapsulation processing unit 1125 may encapsulate a G-PCC bitstream composed of TLV encapsulation structures in the form of a file/segment and transmit it. The decapsulation processing unit 1110 may obtain a G-PCC bitstream by decapsulating the encapsulated file/segment.

In some embodiments, the G-PCC bitstream may be encapsulated in an ISOBMFF-based file format. In this case, the G-PCC bitstream may be stored in a single track or multiple tracks in the ISOBMFF file. Here, the single track or multiple tracks in a file may be referred to as "tracks" or "G-PCC tracks". The ISOBMFF-based file may be referred to as a container, a container file, a media file, a G-PCC file, and the like. Specifically, the file may be composed of boxes and/or information that may be referred to as ftyp, moov, mdat, and the like.

The ftyp box (file type box) may provide file type or file compatibility related information for the file. The reception device may identify the file by referring to the ftyp box. The mdat box is also called a media data box and may include actual media data. In some embodiments, a geometry slice (or coded geometry bitstream) and zero or more attribute slices (or coded attribute bitstream) may be included in a sample of an mdat box in a file. Here, the sample may be referred to as a G-PCC sample. The moov box is also called a movie box, and may include metadata for media data of the file. For example, the moov box may include information necessary for decoding and playback of the media data, and may include information on tracks and samples of the file. The moov box may act as a container for all metadata. The moov box may be a box of the uppermost layer among metadata-related boxes.

In some embodiments, the moov box may include a track (trak) box providing information related to a track of a file, and the trak box may include a media (mdia) box (MediaBox) providing media information of the track, and a track reference container (tref) box for linking (referencing) the track and a sample of a file corresponding to the track. The media box MediaBox may include a media information container (minf) box that provides information on the media data and a handler (hdlr) box that indicates a stream type. The minf box may include a sample table (stbl) box that provides metadata related to a sample of the mdat box. The stbl box may include a sample description (stsd) box that provides information on a used coding type and initialization information required for the coding type. In some embodiments, a sample description (stsd) box may include a sample entry for a track. In some embodiments, signaling information (or metadata) such as SPS, GPS, APS, and tile inventory may be included in a sample entry of a moov box or a sample of an mdat box in a file.

A G-PCC track may be defined as a volumetric visual track carrying a geometry slice (or coded geometry bitstream) or attribute slice (or coded attribute bitstream), or both a geometry slice and an attribute slice. In some embodiments, the volumetric visual track may be identified by a volumetric visual media handler type 'volv' in a handler box HandlerBox of a media box (MediaBox) and/or a volumetric visual media header vvhd in a minf box of a media box MediaBox. The minf box may be referred to as a media information container or a media information box. The minf box may be included in the media box MediaBox, the media box MediaBox may be included in the track box, and the track box may be included in the moov box of the file. A single volumetric visual track or multiple volumetric visual tracks may be present in a file.

### Sample group

The encapsulation processing unit mentioned in the present disclosure may generate a sample group by grouping one or more samples. The encapsulation processing unit, the metadata processing unit, or the signaling processing unit mentioned in the present disclosure may signal signaling information associated with a sample group in a sample, a sample group, or a sample entry. That is, the sample group information associated with the sample group may be added to a sample, a sample group, or a sample entry. The sample group information may be 3D bounding box sample group information, 3D region sample group information, 3D tile sample group information, 3D tile inventory sample group information, and the like.

### Sample entry

FIG. 12 is a diagram for explaining an ISOBMFF-based file including a single track. (a) of FIG. 12 illustrates an example of the layout of an ISOBMFF-based file including a single track, and (b) of FIG. 12 illustrates an example of a sample structure of a mdat box when a G-PCC bitstream is stored in a single track of a file. FIG. 13 is a diagram for explaining an ISOBMFF-based file including multiple tracks. (a) of FIG. 13 illustrates an example of the layout of an ISOBMFF-based file including multiple tracks, and (b) of FIG. 13 illustrates an example of a sample structure of a mdat box when a G-PCC bitstream is stored in a single track of a file.

The stsd box (SampleDescriptionBox) included in the moov box of the file may include a sample entry for a single track storing the G-PCC bitstream. The SPS, GPS, APS, tile inventory may be included in a sample entry in a moov box or a sample in an mdat box in a file. Also, geometry slices and zero or more attribute slices may be included in the sample of the mdat box in the file. When a G-PCC bitstream is stored in a single track of a file, each sample may contain multiple G-PCC components. That is, each sample may be composed of one or more TLV encapsulation structures.

As illustrated in (b) of FIG. 13, the sample may include TLV encapsulation structures including a geometry slice. In addition, a sample may include TLV encapsulation structures including one or more parameter sets. In addition, a sample may include TLV encapsulation structures including one or more attribute slices.

As illustrated in (a) of FIG. 13, when a G-PCC bitstream is carried by multiple tracks of an ISOBMFF-based file, each geometry slice or attribute slice may be mapped to an individual track. For example, a geometry slice may be mapped to track 1, and an attribute slice may be mapped to track 2. The track (track 1) carrying the geometry slice may be referred to as a geometry track or a G-PCC geometry track, and the track (track 2) carrying the attribute slice may be referred to as an attribute track or a G-PCC attribute track. In addition, the geometry track may be defined as a volumetric visual track carrying a geometry slice, and the attribute track may be defined as a volumetric visual track carrying an attribute slice.

A track carrying part of a G-PCC bitstream including both a geometry slice and an attribute slice may be referred to as a multiplexed track. In the case where the geometry slice and attribute slice are stored on separate tracks, each sample in the track may include at least one TLV encapsulation structure carrying data of a single G-PCC component. In this case, each sample contains neither geometry nor attributes, and may not contain multiple attributes. Multitrack encapsulation of a G-PCC bitstream may enable a G-PCC player to effectively access one of the G-PCC components.

### Temporal scalability

Temporal scalability may refer to a function that allows the possibility of extracting one or more subsets of independently coded frames. Also, temporal scalability may refer to a function of dividing G-PCC data into a plurality of different temporal levels and independently processing each G-PCC frame belonging to different temporal levels. If temporal scalability is supported, the G-PCC player (or the transmission device and/or the reception device of the present disclosure) may effectively access a desired component (target component) among G-PCC components. In addition, if temporal scalability is supported, since G-PCC frames are processed independently of each other, temporal scalability support at the system level may be expressed as more flexible temporal sub-layering. In addition, if temporal scalability is supported, the system (the point cloud content provision system) that processes G-PCC data can manipulate data at a high level to match network capability or decoder capability, the performance of the point cloud content provision system can be improved.

### Problems of the related art

A G-PCC bitstream according to an existing file format has only intra-coded frames. In this case, because all the frames in the G-PCC bitstream are intra-coded, a random access function may be automatically activated, but in fact, the random access function may not be available without additional information depending on how the frames are conveyed/stored in tracks of a G-PCC file.

One of the issues regarding the random access function is how parameter sets are stored and conveyed in a track. Parameter sets may be conveyed only in a sample entry or samples or be conveyed in a sample entry and samples. In case parameter sets are conveyed in samples, even if frames in the samples are intra-coded frames, when a frame in a specific sample X refers to parameter sets conveyed not in the sample X but in one of the preceding samples of the sample X, a decoding process cannot start from the sample X. Consequently, for safe playback from a random sample, a file parser/player needs to solve the issue of finding all parameter sets required or referred to by frames starting from a random access point.

According to an existing ISOBMFF file format, there is SyncSampleBox ('stss') capable of conveying information regarding which sample in a track is a sync sample. Furthermore, a sample grouping mechanism for providing useful information for supporting a random access function has been proposed. SyncSampleBox and the sample group mechanism may operate together to provide a random access function. However, a related mechanism (that is, regarding how they operate together to support the random access function) has not been embodied in detail. Thus, the present disclosure may provide various embodiments of a SyncSampleBox property and a player operation for supporting a right random access function.

The embodiments of the present disclosure may be provided based on the following aspects. According to an embodiment, the following aspects may be applied individually or applied as a combination of two or more of them.
- **(Aspect 1):** In case parameter sets are not exclusively conveyed in a sample entry of a track conveying a geometry component or in a tile-based track, parameter set sample group boxes or SyncSampleBox and parameter set sample group boxes may be present in the track.

Alternatively, in case parameter sets are not exclusively conveyed in a sample entry of a track conveying a geometry component or in a tile-based track, parameter set sample group boxes or SyncSampleBox and parameter set sample group boxes may be constrained to be present in the track.
- **(Aspect 2):** In case parameter sets are not exclusively conveyed in a sample entry of a track, because all samples may be considered sync samples (i.e., samples included inSyncSampleBox), SyncSampleBox does not have to be present.
- **(Aspect 3):** In case SyncSampleBox is present, the box may be constrained to be present only in a track or in a tile-based track that contains a geometry component. Sync samples in a track including only an attribute component may be inferred from an associated track conveying a geometry component.
- **(Aspect 4):** In case temporal scalability is supported together with multiple temporal level tracks, SyncSampleBox may be present in a track including only a temporal level 0.
- **(Aspect 5):** In a random access event from a specific sample X, a file player has the following behaviors.
   i) In case a sample entry of a track is 'gpe1' or 'gpc1', the file player may start decoding and playback from the sample X on its own. Parameter sets necessary for decoding the sample X and subsequent samples in decoding order may be available in the sample entry of the track.
   ii) Alternatively, in case SyncSampleBox is present and the sample X is indicated as a sync sample, the file player may start decoding and playback from the sample X on its own. At this time, parameter sets necessary for decoding the sample X and subsequent samples in decoding order should be available in a sample entry of a track or in the sample X.
   iii) Alternatively, if parameter set sample group boxes are present, the file player may find samples including parameter sets necessary for decoding from information provided by the parameter set sample group boxes and start decoding from the sample X.
   iv) Alternatively (that is, a track is not 'gpe1' or 'gpc1' and SyncSampleBox and a parameter set sample group box are not present), random access from the sample X may not be designated.

Based on the above-described aspects, the embodiments of the present disclosure may be implemented as follows.

### (1) Sync sample box (SyncSampleBox)

A sync sample may mean a sample in a track starting from ISAU of a stream access point (SAP) of a predetermined type (e.g., type 1 or type 2) or a media sample beginning a sequence of new independent samples. In case a decoding process starts from a sync sample, the sample and subsequent samples in decoding order may be rightly decoded. Herein, a result set of the decoded samples may form a right presentation of media starting from a decoded sample with an earliest synthesis time.

A sync sample box may provide simple markings of sync samples in a stream. An example of a syntax structure of a sync sample box is as shown in Table 1.

**[Table 1]**

| |
|---|
| aligned(8) class SyncSampleBox |
| extends FullBox('stss', version = 0, 0) { |
| unsigned int(32) entry_count; |
| int i; |
| for (i=0; i < entry_count; i++) { |
| unsigned int(32) sample_number; |
| } |
| } |

In Table 1, the syntax element entry_count may represent a number of entries in a subsequent table. If entry_count has a value of 0, there is no sync sample in a stream, and the subsequent table may be empty. The syntax element sample_number may represent a number of sync samples in a stream.

A sync sample box may be present in the following tracks.
- a track with a sample entry type 'gpeg'
- a track including a geometry component and having a sample entry type 'gpcg'
- a track with a sample entry type 'gpeb' or 'gpcb'

A sync sample box does not have to be present in a track with a sample entry type 'gpe1' and a track with a sample entry type 'gpc1'. This is because all samples have an intra-coded frame, and parameter sets necessary for decoding a sample in the track are conveyed in a sample entry.

SyncSampleBox may be constrained not to include a geometry component and not to be present in a track with the sample entry type 'gpcg'. In case samples in a track including a geometry component and having the sample entry type 'gpcg' are indicated as sync samples (i.e., samples included in SyncSampleBox), corresponding samples in an associated track (i.e., samples with an identical decoding time stamp and/or presentation time stamp) may also be considered sync samples.

In case both SyncSampleBox and parameter sample set sample group boxes are not present in a track with the sample entry type 'gpeg', a track with the sample entry 'gpcg' including a geometry component, or a track with the sample entry 'gpeb' or 'gpcb', a method for performing random access playback may not be designated.

In case temporal scalability is supported and a bitstream is stored in multiple temporal level tracks, SyncSampleBox may be present only in a track including the temporal level 0.

### (2) Player operation during random access

In the event of random access from a specific sample X, a file player may perform the following process.
i) In case a sample entry of a track is 'gpe1' or 'gpc1', the file player may start decoding and playback from the sample X on its own. Herein, parameter sets necessary for decoding the sample X and subsequent samples in decoding order may be available in the sample entry of the track.
ii) Alternatively, in case SyncSampleBox is present and the sample X is indicated as a sync sample, the file player may start decoding and playback from the sample X on its own. Herein, parameter sets necessary for decoding the sample X and subsequent samples in decoding order may be constrained to be available in a sample entry of the track or in the sample X.
iii) Alternatively, if parameter set sample group boxes are present, the file player may find samples including parameter sets (e.g., SPS, GPS, APS and FSAP) necessary for decoding from information provided by the parameter set sample group boxes and start decoding from the sample X. Samples including the parameter sets may be the sample X itself or samples preceding the sample X. In case the samples are found, a file parser may extract all parameter sets in the samples and make them available for decoding/playback starting from the sample X.
iv) Alternatively (that is, the track is not 'gpe1' or 'gpc1' and SyncSampleBox and none of the parameter set sample group box is present), random access from the sample X may not be designated.

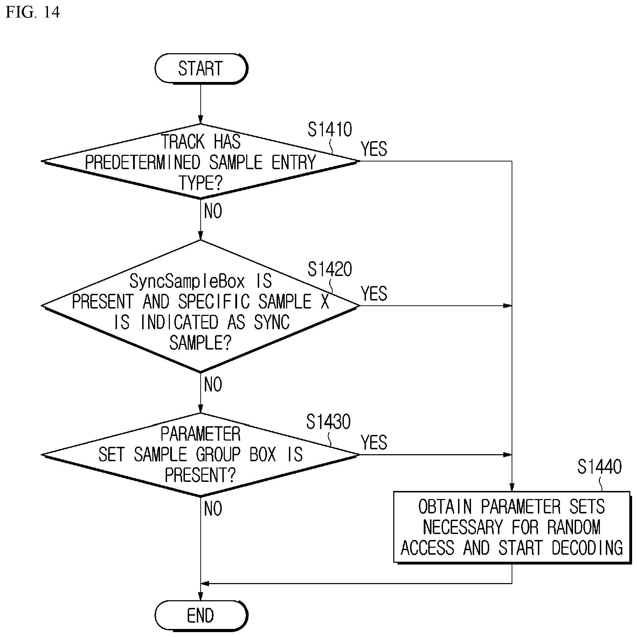

The above-described file player operation based on a sync sample box property in the event of random access may be summarized as in FIG. 14.

Referring to FIG. 14, when a random access request occurs starting from a specific sample X, a file player may determine whether or not a track (including the sample X) has a predetermined sample entry type 'gpe1' or 'gpc1' (S1410). As a result of the determination, if the track has the predetermined sample entry type (YES of S1410), the file player may start decoding for random access playback from the sample X by referring to parameter sets in a sample entry of the track (S1440).

On the other hand, if the track does not have the predetermined sample entry type (NO of S1410), the file player may determine whether or not SyncSampleBox is present and whether or not the sample X is indicated as a sync sample (S1420). As a result of the determination, if SyncSampleBox is present and the sample X is indicated as a sync sample (YES of S1420), the file player may start decoding for random access playback from the sample X by referring to parameter sets in a sample entry of the track or in the sample X (S1440).

On the other hand, if SyncSampleBox is not present or the sample X is not indicated as a sync sample (NO of S1420), the file player may determine whether or not parameter set sample group boxes are present (S1430). As a result of the determination, if the parameter set sample group boxes are present (YES of S1430), the file player may start decoding for random access playback from the sample X by referring to parameter sets that are obtained based on the parameter set sample group boxes (S1440).

Meanwhile, if the parameter set sample group boxes are not present (NO of S1430), the file player may not perform decoding from the sample X, determining that random access playback is impossible.

Thus, according to the present disclosure, a detailed mechanism of a SyncSampleBox property and a player operation may be provided for random access. Accordingly, a random access function may be rightly supported.

Hereinafter, a method performed in a reception device and a transmission device of point cloud data according to embodiments of the present disclosure will be described in detail.

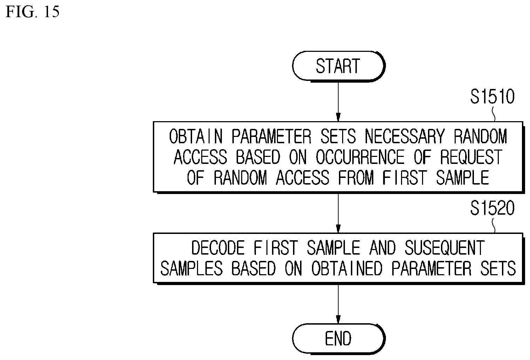

FIG. 15 is a flowchart showing a method performed in a reception device of point cloud data according to an embodiment of the present disclosure.

Referring to FIG. 15, a reception device may obtain parameter sets necessary for random access from point cloud data, based on occurrence of a request of the random access from a first sample among samples included in the point cloud data (S1510).

In addition, based on the parameter sets, the reception device may decode the first sample and one or more samples subsequent to the first sample in decoding order (S1520).

In an embodiment, based on a sample entry type of a track including the first sample being 'gpe1' or 'gpc1', the parameter sets may be obtained from a sample entry of the track.

In an embodiment, based on the sample entry type of the track being 'gpe1' or 'gpc1', the point cloud data may not include a sync sample box.

In an embodiment, when the sample entry type of the track including the first sample is not 'gpe1' or 'gpc1', the parameter sets may be obtained from a sample entry of the track or the first sample, based on the point cloud data including a sync sample box and the first sample being indicated as a sync sample.

In an embodiment, the sync sample box may be present in a predetermined track of the point cloud data. Herein, the predetermined track may be any one of a track with the sample entry type 'gpeg', a track including a geometry component and having the sample entry type 'gpcg', or a track with the sample entry type 'gpeb' or 'gpcb'.

In an embodiment, the sync sample box may be constrained not to include a geometry component and not to be present in a track with the sample entry type 'gpcg'.

In an embodiment, based on samples in a track including a geometry component and having the sample entry type 'gpcg' being indicated as sync samples, corresponding samples in an associated track may be treated as sync samples.

In an embodiment, when the point cloud data does not include a syn sample box or the first sample is not indicated as a sync sample, the parameter sets may be obtained from the first sample or samples preceding the first sample in decoding order, based on the point cloud data including parameter set sample group boxes. On the other hand, when the point cloud data does not include a syn sample box, the above-described obtaining of the parameter sets (S1510) and the decoding (S1520) may not be performed.

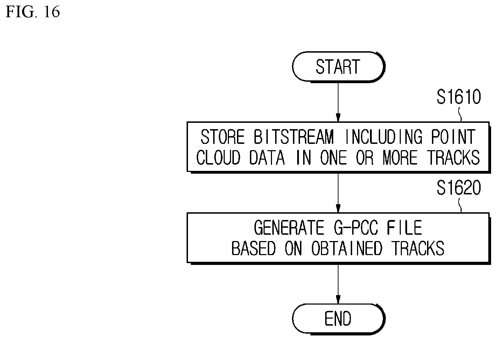

FIG. 16 is a flowchart showing a method performed in a transmission device of point cloud data according to an embodiment of the present disclosure.

Referring to FIG. 16, a transmission device may store a bitstream including the point cloud data in one or more tracks (S1610).

In addition, the transmission device may generate a G-PCC file based on the tracks (S1620).

In an embodiment, parameter sets necessary for performing random access from a first sample among samples included in the point cloud data may be included in a sample entry of a track, based on a sample entry type of the track including the first sample being 'gpe1' or 'gpc1'.

In an embodiment, when the sample entry type of the track is not 'gpe1' or 'gpc1', the parameter sets may be included in a sample entry of the track or the first sample, based on the point cloud data including a sync sample box and the first sample being indicated as a sync sample.

In an embodiment, when the point cloud data does not include a syn sample box or the first sample is not indicated as a sync sample, the parameter sets may be included in the first sample or samples preceding the first sample in decoding order, based on the point cloud data including parameter set sample group boxes. On the other hand, when the point cloud data does not include parameter set sample group boxes, the parameter sets may not be included in the point cloud data.

Although exemplary methods of the present disclosure are represented as a series of operations for clarity of description, the order of the steps is not limited thereto, and when necessary, the illustrated steps may be performed simultaneously or in a different order. In order to realize the method according to the present disclosure, other steps may be added to the illustrative steps, some steps may be excluded while the remaining steps may be included, or some steps may be excluded while additional steps may be included.

In the present disclosure, a transmission device or a reception device performing a predetermined operation (step) may perform an operation (step) for checking a condition or situation for performing the predetermined operation (step). For example, in case it is specified that a predetermined operation is not performed unless a predetermined condition is satisfied, an image encoding apparatus or an image decoding apparatus may perform the predetermined operation after performing an operation for checking whether or not the predetermined condition is satisfied.

The various embodiments of the present disclosure are not intended to list all possible combinations, but to illustrate representative aspects of the present disclosure. The matters described in the various embodiments may be applied independently or in a combination of two or more.

Also, the various embodiments of the present disclosure may be implemented by hardware, firmware, software, or a combination thereof. With hardware implementation, the embodiment may be implemented by using at least one selected from a group of application specific integrated circuits (ASICs), digital signal processors (DSPs), digital signal processing devices (DSPDs), programmable logic devices (PLDs), field programmable gate arrays (FPGAs) general-purpose processors, controllers, micro controllers, micro processors, etc.

The scope of the disclosure includes software or machine-executable commands (e.g., an operating system, an application, firmware, a program, etc.) for enabling operations according to the methods of various embodiments to be executed on an apparatus or a computer, a non-transitory computer-readable medium having such software or commands stored thereon and executable on the apparatus or the computer.

### Industrial Applicability

The embodiments of the present disclosure may be used to provide point cloud content. In addition, the embodiments of the present disclosure may be used to encode/decode point cloud data.

## Claims

1. A method performed by a reception apparatus of point cloud data, the method comprising:
obtaining parameter sets necessary for a random access, from the point cloud data, based on that a request for the random access from a first sample within the point cloud data is occurred; and
decoding the first sample and one or more samples that follow the first sample in decoding order, based on the obtained parameter sets,
wherein the parameter sets are obtained from either a sample entry of a track including the first sample or a predetermined sample, based on at least one of a sample entry type of the track, a presence of a sync sample box or a presence of parameter set sample group boxes.

2. The method of claim 1,
wherein, based on that the sample entry type of the track is 'gpe1' or 'gpc1', the parameter sets are obtained from the sample entry of the track.

3. The method of claim 1,
wherein, based on that the sample entry type of the track is 'gpe1' or 'gpc1', the point cloud data does not comprise the sync sample box.

4. The method of claim 1,
wherein, based on that the sample entry type of the track is not 'gpe1' or 'gpc1',
the parameter sets are obtained from the sample entry of the track or the first sample, based on that the point cloud data comprises the sync sample box and the first sample is indicated as a sync sample.

5. The method of claim 4,
wherein the sync sample box is present in a track with a sample entry type 'gpeg', a track comprising a geometry component and with a sample entry type 'gpcg', or a track with a sample entry type 'gpeb' or 'gpcb'.

6. The method of claim 4,
wherein the sync sample box is constrained to be not present in a track with a sample entry type 'gpcg' that does not contain geometry component.

7. The method of claim 4,
wherein, based on that samples in a track with a sample entry type 'gpcg' that contains geometry component are indicated as sync samples, corresponding samples in an associated track are treated as sync samples.

8. The method of claim 4,
wherein, based on that the point cloud data does not comprise the sync sample box or the first sample is not indicated as the sync sample,
the parameter sets are obtained from the first sample or samples that precede the first sample in decoding order, based on that the point cloud data comprises the parameter set sample group boxes.

9. The method of claim 8,
wherein, based on that the point cloud data does not comprise the parameter set sample group boxes, the obtaining of the parameter sets and the decoding are not performed.

10. A reception apparatus of point cloud data, the apparatus comprising:
memory; and
at least one processor, the processor configured to:
obtain parameter sets necessary for the random access from the point cloud data, based on that a request for a random access from a first sample among samples within the point cloud data is occurred, and
decode the first sample and one or more samples that follow the first sample in decoding order, based on the obtained parameter sets, and
wherein the parameter sets are obtained from either a sample entry of a track including the first sample or a predetermined sample, based on at least one of a sample entry type of the track, a presence of a sync sample box or a presence of parameter set sample group boxes.

11. A method performed by a transmitting apparatus of point cloud data, the method comprising:
storing a bitstream including the point cloud data into one or more tracks; and
generating a geometry-based point cloud compression (G-PCC) file based on the tracks,
wherein parameter sets necessary for a random access from a first sample within the point cloud data are included in either a sample entry of a track including the first sample or a predetermined sample, based on at least one of a sample entry type of the track, a presence of a sync sample box or a presence of parameter set sample group boxes.

12. The method of claim 11,
wherein, based on that the sample entry type of the track including the first sample is 'gpe1' or 'gpc1', the parameter sets are included in the sample entry of the track.

13. The method of claim 11,
wherein, based on that the sample entry type of the track is not 'gpe1' or 'gpc1',
the parameter sets are included in the sample entry of the track or the first sample, based on that the point cloud data comprises the sync sample box and the first sample is indicated as a sync sample.

14. The method of claim 12,
wherein, based on that the point cloud data does not comprise the sync sample box or the first sample is not indicated as the sync sample,
the parameter sets are included in the first sample or samples that precede the first sample in decoding order, based on that the point cloud data comprises the parameter set sample group boxes.

15. A transmitting apparatus of point cloud data, the apparatus comprising:
memory; and
at least one processor, the at least one processor configured to:
store a bitstream including the point cloud data into one or more tracks, and
generate a geometry-based point cloud compression (G-PCC) file based on the tracks, and
wherein parameter sets necessary for a random access from a first sample within the point cloud data are included in either a sample entry of a track including the first sample or a predetermined sample, based on at least one of a sample entry type of the track, a presence of a sync sample box or a presence of parameter set sample group boxes.
